(19) **Europäisches Patentamt / European Patent Office / Office européen des brevets**

(11) **EP 4 439 466 B1**

(12) **EUROPÄISCHE PATENTSCHRIFT**

(45) Veröffentlichungstag und Bekanntmachung des Hinweises auf die Patenterteilung:
**09.07.2025   Patentblatt 2025/28**

(21) Anmeldenummer: **23165842.8**

(22) Anmeldetag: **31.03.2023**

(51) Internationale Patentklassifikation (IPC):
**G06T 11/00** *(2006.01)*

(52) Gemeinsame Patentklassifikation (CPC):
**G06T 11/005;** G06T 2211/412; G06T 2211/436; G06T 2211/441

(54) **COMPUTERIMPLEMENTIERTES VERFAHREN ZUR BEREITSTELLUNG EINES AUSGANGSDATENSATZES, VERFAHREN ZUR BESTIMMUNG EINER STATISTIKINFORMATION, VORRICHTUNG, COMPUTERPROGRAMM UND DATENTRÄGER**

COMPUTER-IMPLEMENTED METHOD FOR PROVIDING AN OUTPUT DATA SET, METHOD FOR DETERMINING STATISTICAL INFORMATION, DEVICE, COMPUTER PROGRAM AND DATA CARRIER

PROCÉDÉ MIS EN OEUVRE PAR ORDINATEUR POUR FOURNIR UN ENSEMBLE DE DONNÉES DE SORTIE, PROCÉDÉ POUR DÉTERMINER UNE INFORMATION STATISTIQUE, DISPOSITIF, PROGRAMME INFORMATIQUE ET SUPPORT DE DONNÉES

(84) Benannte Vertragsstaaten:
**AL AT BE BG CH CY CZ DE DK EE ES FI FR GB GR HR HU IE IS IT LI LT LU LV MC ME MK MT NL NO PL PT RO RS SE SI SK SM TR**

(43) Veröffentlichungstag der Anmeldung:
**02.10.2024   Patentblatt 2024/40**

(73) Patentinhaber: **Siemens Healthineers AG 91301 Forchheim (DE)**

(72) Erfinder:
- **Manhart, Michael
  90765 Fürth (DE)**
- **Meier, Manuela
  90425 Nürnberg (DE)**
- **Preuhs, Alexander
  91058 Erlangen (DE)**

(74) Vertreter: **Siemens Healthineers Patent Attorneys
Postfach 22 16 34
80506 München (DE)**

(56) Entgegenhaltungen:
**DE-A1- 102020 216 017**

- **SHAH NIHAR B ET AL: "Simple, Robust and Optimal Ranking from Pairwise Comparisons", JOURNAL OF MACHINE LEARNING RESEARCH, vol. 18, April 2018 (2018-04-01), XP093075056, Retrieved from the Internet <URL:https://www. jmlr.org/papers/volume18/16-206/16-206.pdf> [retrieved on 20230821]**
- **ALEXANDER PREUHS ET AL: "Deep autofocus with cone-beam CT consistency constraint", ARXIV.ORG, CORNELL UNIVERSITY LIBRARY, 201 OLIN LIBRARY CORNELL UNIVERSITY ITHACA, NY 14853, 29 November 2019 (2019-11-29), XP081541954**

## Beschreibung

Die Erfindung betrifft ein computerimplementiertes Verfahren zur Bereitstellung eines Ausgangsdatensatzes auf Basis eines ein Untersuchungsobjekt betreffenden Eingangsdatensatzes, ein computerimplementiertes Verfahren zur Bestimmung einer Statistikinformation, eine Vorrichtung, ein Computerprogramm und einen Datenträger.

Im Bereich der Bilddatenverarbeitung, insbesondere im Bereich der Verarbeitung von medizinischen Bilddaten, ist es bekannt, dass durch unterschiedliche Parametrisierungen der Bilddatenverarbeitung, beispielsweise einer Rekonstruktion von dreidimensionalen Bilddaten aus Projektionsbildern in der Röntgenbildgebung, unterschiedliche Bildqualitäten resultieren können.

Ein wesentliches Feld der Bildqualitätsverbesserung ist die Artefaktreduktion. Beispielsweise können Metall- und Strahlaufhärtungsartefakte in der Röntgenbildgebung durch eine geeignete Bilddatenverarbeitung zumindest teilweise kompensiert werden. Bei einer dreidimensionalen Röntgenbildgebung wird ein dreidimensionaler Bilddatensatz aus mehreren Projektionsbildern rekonstruiert. Durch eine Bewegung des Untersuchungsobjekts oder andere Bewegungen, beispielsweise durch eine Vibration des Röntgendetektors, könne auch Bewegungsartefakte, insbesondere eine Unschärfe oder eine Bildung von Geisterbildern, auftreten, die durch geeignete Bilddatenverarbeitung kompensiert oder zumindest reduziert werden können.

Ein möglicher Ansatz hierfür sind sogenannte Autofocus-Verfahren, bei denen ein Bewegungsmodell im Rahmen der Rekonstruktion durch Optimierung eines Bildqualitätsmaßes, beispielsweise einer Grauwerthistogrammentropie oder der totalen Variation, ermittelt wird. Beispielhaft wird diesbezüglich auf die Veröffentlichung M. Herbst et al., "Misalignment Compensation for Ultra-High Resolution and Fast CBCT Acquisitions," Proc SPIE, vol. 10948, pp. 406-412 412, 2019 verwiesen.

Da solche Bildqualitätsmaße lokale Minima aufweisen können, schlägt die Veröffentlichung A. Preuhs et al., "Image Quality Assessment for Rigid Motion Compensation," MedNeurIPS, 2019 vor, stattdessen die Qualität der rekonstruierten Bilddaten mithilfe eines durch Maschinenlernen trainierten Algorithmus abzuschätzen, der ein Maß für den Reprojektionsfehler berechnet.

Da eine trainierte Funktion, die ein absolutes Maß für die Bildqualität, beispielsweise einen Reprojektionsfehler, ermitteln soll, eine hohe Komplexität aufweist und somit ein aufwändiges Training mit umfangreichen Trainingsdaten erforderlich ist, schlägt die Druckschrift DE 10 2020 216 017 A1 vor, stattdessen unmittelbar zwei Zwischendatensätze, die durch voneinander verschiedene Korrekturen bereitgestellt werden, miteinander zu vergleichen und somit ein relatives Bildqualitätsmaß beziehungsweise eine Ordnung der verglichenen Zwischendatensätze bezüglich ihrer relativen Bildqualität zu ermitteln. Dies kann durch ein "Ordinal Network" als trainierte Funktion implementiert werden. In einigen Fällen, beispielsweise wenn Bewegungsartefakte aufgrund von relativ großen Bewegungen kompensiert werden sollen, kann die Nutzung der relativen Bildqualität jedoch dazu führen, dass nur ein lokales Qualitätsoptimum erreicht wird.

Der Erfindung liegt somit die Aufgabe zugrunde, eine demgegenüber verbesserte Bildverarbeitung bereitzustellen, wobei insbesondere trotz einer Nutzung von relativen Bildqualitäten die Wahrscheinlichkeit verringert werden soll, ausschließlich ein lokales Qualitätsoptimum zu erreichen.

Die Aufgabe wird durch ein computerimplementiertes Verfahren gemäß Anspruch 1 gelöst.

In dem erfindungsgemäßen Verfahren soll durch die Iteration insbesondere eine Annäherung an eine optimale Korrektur des Eingangsdatensatzes beziehungsweise eines aus diesem ermittelten Bilddatensatzes erreicht werden. Als Ausgangsdatensatz kann unmittelbar der ausgewählte Zwischendatensatz als Bilddatensatz bereitgestellt werden. Da die Zwischendatensätze gemäß ihrer Bildqualität geordnet sind, kann beispielsweise bei absteigender Qualitätsrangfolge unmittelbar der erste Zwischendatensatz als ausgewählter Zwischendatensatz genutzt werden.

Es kann vorteilhaft sein, ergänzend oder alternativ zur Ausgabe des ausgewählten Zwischendatensatzes den wenigstens einen Korrekturparameter, der zur Bereitstellung dieses Zwischendatensatzes beziehungsweise der zugeordneten Korrekturoperation genutzt wurde, als Teil des Ausgangsdatensatzes bereitzustellen. Dies kann insbesondere dazu dienen, die Bestimmung von Korrekturparametern, also beispielsweise von Parametern eines Artefakt- beziehungsweise Bewegungsmodells, von der Bilddatenverarbeitung, also beispielsweise von einer Bildrekonstruktion, zu separieren.

Als nachgelagerter Verfahrensschritt oder auch nach Ende des erfindungsgemäßen Verfahrens in einem außerhalb des Verfahrens liegenden, dem Ende des erfindungsgemäßen Verfahrens nachgelagerten Verfahrensschritt, kann dann eine Bilddatenverarbeitung erfolgen, die aus dem Eingangsdatensatz unter Verwendung des wenigstens einen Korrekturparameters einen korrigierten Bilddatensatz erzeugt. Beispielsweise kann sowohl die im Verfahren genutzte Korrekturoperation als auch die nachgelagerte Bilddatenverarbeitung eine Rekonstruktion von dreidimensionalen Bilddaten aus zweidimensionalen Bilddaten, beispielsweise aus Projektionsbildern, umfassen, wobei zur Bereitstellung des ausgewählten Zwischendatensatzes und der korrigierten Bilddaten die gleichen Korrekturparameter genutzt werden, sich diese Vorgänge aber bezüglich anderer Parameter, beispielsweise bezüglich der genutzten Voxelgröße und/oder der Glättungsparameter, voneinander unterscheiden.

Da bei dem paarweisen Vergleichen der Zwischendatensätze die ermittelte relative Bildqualität fehlerbehaftet sein kann, kann in einzelnen Fällen ein erster Zwischendatensatz, der tatsächlich eine bessere Bildqualität aufweist als der zweite Zwischendatensatz des Paares nicht als solcher erkannt werden. Dies entspricht einer falsch negativen Erkennung. Zudem kann ein erster Zwischendatensatz, der tatsächlich eine niedrigere Bildqualität aufweist als der mit ihm verglichene zweite Zwischendatensatz, als qualitativ höherwertig erkannt werden. Dies entspricht einer falsch positiven Erkennung.

Eine hohe Falsch-Positive-Rate führt bei der Optimierung dazu, dass diese nicht konvergiert beziehungsweise das tatsächliche Optimum nicht aufgefunden werden kann. Durch Wahl eines geeigneten Qualitätsgrenzwertes kann die Falsch-Positiv-Rate, also die Häufigkeit einer falsch positiven Erkennung, jedoch reduziert werden. Dies führt jedoch notwendig auch zu einer Reduzierung der Richtig-Positiv-Rate, also der Häufigkeit, mit der korrekt erkannt wird, wenn der erste Zwischendatensatz tatsächlich eine bessere Bildqualität aufweist als der zweite Zwischendatensatz. Dies verstärkt die Tendenz, dass statt einem globalen Optimum nur ein lokales Optimum aufgefunden werden kann.

Diese Problematik wird im erfindungsgemäßen Verfahren vermieden oder zumindest deutlich verringert, indem der Qualitätsgrenzwert zwischen den Iterationen und/oder in Abhängigkeit von dem Eingangsdatensatz selbst beziehungsweise von der Erfassungsinformation angepasst wird.

Durch eine Nutzung unterschiedlicher Qualitätsgrenzwerte für unterschiedliche Iterationen kann insbesondere zunächst mit hoher Sensitivität, also mit hoher Richtig-Positiv-Rate, ein großer Parameterraum abtasten werden, da neue Korrekturen beziehungsweise Zwischendatensätze mit höherer Wahrscheinlichkeit als qualitativ besser klassifiziert werden. Hierdurch wird insbesondere die Wahrscheinlichkeit verringert, dass die Optimierung im Bereich eines lokalen Optimums verharrt.

Nach einigen Iterationen beziehungsweise dann, wenn erkannt wird, dass mit dem zunächst genutzten Grenzwert keine weitere Verbesserung erreicht wird, kann der Grenzwert derart geändert werden, dass die Falsch-Positive-Rate reduziert wird und somit insbesondere eine robuste und schnelle Konvergenz erreicht wird. Statt einer stufenweisen Anpassung nach mehreren Iterationen ist es alternativ auch möglich, den Grenzwert für jede Iteration neu zu wählen oder Ähnliches.

Ein Zustand, in dem bei gegebenem Grenzwert keine weitere Verbesserung mehr erreicht wird, kann beispielsweise dann vorliegen beziehungsweise erkannt werden, wenn Unterschiede zwischen dem besten und dem schlechtestem der Zwischendatensätze der aktuellen Zwischendatensatzgruppe einen Grenzwert unterschreitet oder wenn ein alternatives Qualitätsmaß eine hinreichende Qualität beziehungsweise keine weitere Qualitätsänderung zeigt.

Die Berücksichtigung des Eingangsdatensatzes selbst bei der Bestimmung des Grenzwertes kann beispielsweise dazu dienen, bei Indizien für stärkere Artefakte, Bewegungen oder Ähnliches, beispielsweise bei geringem Signal-zu-Rauschverhältnis, unscharfen Bilddaten und/oder starken Kontrastsprüngen, die auf Metalleinschlüsse oder ähnliche artefaktverursachende Probleme hinweisen können, den Grenzwert zunächst so einzustellen, dass, insbesondere aufgrund einer hohen Richtig-Positiv-Rate, eine Konvergenz in einem ausschließlich lokalen Optimum verhindert wird beziehungsweise zumindest deutlich unwahrscheinlicher ist als bei einem Grenzwert mit geringerer Richtig-Positiv-Rate.

Gleiches gilt, wenn die Erfassungsinformationen das potentielle Vorhandensein starker Störungen indiziert, beispielsweise wenn die Erfassungsinformationen auf eine starke Bewegung des Untersuchungsobjekts während der Erfassung des Eingangsdatensatzes und/oder auf lange Zeitabstände zwischen Erfassungen von Teildatensätzen hindeutet. Solche Informationen können beispielsweise einem Meßprotokoll entnommen werden beziehungsweise während der Erfassung des Eingangsdatensatzes über zusätzliche Sensoren einer Erfassungseinrichtung erfasst werden.

Sind die Störungen hingegen voraussichtlich eher gering, kann unmittelbar einen Grenzwert mit einer niedrigen Falsch-Positiv-Rate genutzt werden, um ein robustes und schnelles Konvergieren der Optimierung zu erreichen.

Bei dem Eingangsdatensatz kann es sich insbesondere um medizinische Bilddaten handeln. Beispielsweise können als Eingangsdaten mehrere Projektionsbilder einer Röntgeneinrichtung empfangen werden. Es können jedoch auch andere zweidimensionale oder dreidimensionale Bilddaten als Eingangsdatensatz verarbeitet werden. Die Zwischendatensätze beziehungsweise der Ausgangsdatensatz können, abgesehen von der jeweiligen Korrektur durch die jeweilige Korrekturoperation, im einfachsten Fall dem Eingangsdatensatz entsprechen, also beispielsweise ebenfalls zweidimensionale Bilddaten sein. In einer bevorzugten Ausgestaltung kann der Eingangsdatensatz mehrere zweidimensionale Bilder, insbesondere Projektionsbilder, umfassen, aus denen eine dreidimensionales Bild rekonstruiert wird, beispielsweise im Rahmen der dreidimensionalen Röntgenbildgebung.

Der Eingangsdatensatz kann unmittelbar durch eine Erfassungseinrichtung, beispielsweise durch eine medizinische Bildgebungseinrichtung, bereitgestellt werden, aus einer Datenbank ausgelesen werden oder Ähnliches.

Die Korrekturoperation kann insbesondere zur Artefaktreduktion, beispielsweise zur Korrektur von Bewegungsartefakten, Metallartefakten bzw. Artefakten auf Basis von Hochkontrastbereichen, Strahlaufhärtungsartefakten und/oder Streustrahlungsartefakten, dienen. Ergänzend oder alternativ kann die Korrekturoperationen auch eine Kontrast- und/oder Schärfeoptimierung umfassen.

In dem Fall, dass im Rahmen der Bereitstellung des Ausgangsdatensatzes auch eine Rekonstruktion von dreidimensionalen Bilddaten aus zweidimensionalen Bilddaten erfolgt, ist es prinzipiell möglich, dass die genannten Korrekturen zunächst auf die zweidimensionalen Bilddaten angewandt werden und die anschließende Rekonstruktion der dreidimensionalen Bilddaten von der Korrektur unabhängig erfolgt.

Insbesondere bei einer Korrektur von Bewegungsartefakten kann es jedoch vorteilhaft sein, eine Korrektur, beispielsweise bezüglich einer Relativbewegung eines Erfassungsmittels der Bildgebungseinrichtung und des Untersuchungsobjekts, bei der Rekonstruktion zu berücksichtigen.

Korrekturalgorithmen zur Korrektur von zweidimensionalen Bilddaten beziehungsweise für eine korrigierte Rekonstruktion sind an sich bereits bekannt. Eine optimale Korrektur benötigt jedoch typischerweise eine Parametrisierung, beispielsweise die Vorgabe eines Bewegungspfades des Untersuchungsobjekts, für den die Bewegung korrigiert werden soll.

In dem erfindungsgemäßen Verfahren können somit die Korrekturoperationen insbesondere auf dem gleichen Korrekturalgorithmus basieren, der jedoch zur Erzeugung der unterschiedlichen Zwischendatensätze mit voneinander unterschiedlichen Korrekturparametern parametrisiert wird, sodass im erfindungsgemäßen Verfahren eine Optimierung der Parametrisierung eines Korrekturalgorithmus erfolgen kann. Im Rahmen der Optimierung kann somit ein jeweiliger optimierter Wert für den wenigstens einen Korrekturparameter ermittelt und als Teil des Ausgangsdatensatzes bereitgestellt werden.

Als Bildqualität wird insbesondere eine Bildqualität gemäß wenigstens eines vorgegebenen Qualitätskriteriums oder absoluten Qualitätsmaßes, also beispielsweise bezüglich einer Minimierung von Bewegungsartefakten und/oder anderen Artefakten, betrachtet.

Die Optimierung der Korrekturoperation, also insbesondere des wenigstens einen Korrekturparameters, beziehungsweise das Auffinden des optimalen Zwischendatensatzes kann insbesondere durch ein Downhill-Simplex-Verfahren, auch bekannt als Nelder-Mead-Verfahren, erfolgen. Das Downhill-Simplex-Verfahren ist an sich wohlbekannt und soll daher nicht detailliert erläutert werden. Das Downhill-Simplex-Verfahren erfordern zur Optimierung der Bildqualität im jeweiligen Iterationsschritt ein Sortieren der Zwischendatensätze bezüglich der absoluten Bildqualität. Durch die Nutzung des Vergleichsalgorithmus und des Grenzwertvergleichs zum paarweisen Vergleich der Zwischendatensätze ist für diese Sortierung im erfindungsgemäßen Verfahren die Ermittlung einer relativen Bildqualität zwischen jeweils zwei der Zwischendatensätze ausreichend. Beispielsweise kann die Sortierung auf Basis eines paarweisen Vergleichs durch einen Bubble- oder Quick-Sort-Algorithmus erfolgen.

Der jeweilige Qualitätsgrenzwert kann für wenigstens eine der Iterationen in Abhängigkeit einer Statistikinformationen vorgegeben werden, die einen Zusammenhang einer Richtig-Positiv-Rate und/oder einer Falsch-Positiv-Rate der ermittelten Reihenfolge des ersten und zweiten Zwischendatensatzes von dem Grenzwert für vorgegebene Referenzdaten beschreibt.

Wie bereits erläutert wurde, kann in Abhängigkeit der Anzahl der bereits durchlaufenen Iterationsschritte beziehungsweise des vorangehenden Grades der Konvergenz der Zwischendatensätze und/oder in Abhängigkeit von Eigenschaften des Eingangsdatensatzes beziehungsweise der Erfassungsinformation die Nutzung eines Grenzwertes mit relativ hohe Richtig-Positiv-Rate erforderlich sein. Bei gegebenem Vergleichsalgorithmus führt die Nutzung eines Grenzwertes mit einer höheren Richtig-Positive-Rate jedoch notwendig dazu, dass auch die Falsch-Positiv-Rate erhöht ist. Durch die Statistikinformationen kann für jeden möglichen Grenzwert die Richtig-Positiv-Rate und/oder die Richtig-Negativ-Rate bekannt sein, sodass anhand der Statistikinformation ein besonders geeigneter Grenzwert gewählt werden kann.

Beispielsweise kann eine gewichtete Summe aus der Sensitivität, die der Richtig-Positiv-Rate entspricht, und der Spezifität, die durch Subtraktion der Falsch-Positiv-Rate von 1 berechnet wird, maximiert werden, wobei die jeweilige Gewichtung der Sensitivität und der Spezifität davon abhängen, ob für den momentanen Iterationsschritt eher eine hohe Spezifität, also beispielsweise eine schnelle Konvergenz, oder eine hohe Sensitivität, die insbesondere zum Vermeiden des optimieren auf ein lokales Minimum hin relevant ist, vorteilhaft ist.

Die Referenzdaten können eine oder mehrere Gruppen von Zwischendatensätzen umfassen, deren Qualitätsrangfolge bekannt ist. Im einfachsten Fall kann die Qualitätsrangfolge beispielsweise durch eine manuelle Bewertung durch einen oder mehrere Experten vorgegeben werden. Es kann jedoch auch eine automatische Anordnung erfolgen. Soll in dem erläuterten Verfahren beispielsweise eine Bewegungskorrektur erfolgen, kann zunächst durch eine Simulation oder eine Datenerfassung unter kontrollierten Bedingungen ein Eingangsdatensatz bereitgestellt werden, der nicht durch Bewegungen gestört ist. Aus diesem kann dann auf Basis eine Simulation ein Eingangsdatensatz ermittelt werden, der aus einer bekannten Bewegung als Störung resultiert. Somit ist die zu kompensierende Bewegung vollständig bekannt und somit auch die optimale Korrekturoperation beziehungsweise der optimale Wert für den wenigstens einen Korrekturparameter.

Ist die Korrekturoperation beispielsweise durch den Bewegungspfad des Untersuchungsobjekts, der insbesondere durch den wenigstens einen Korrekturparameter vorgegeben ist, parametrisiert, kann somit beispielsweise ein Maß für den Fehler der Korrektur eingeführt werden, beispielsweise ein Abstandsmaß für den Abstand zwischen dem korrekten Bewegungspfad und einem für den jeweiligen Zwischendatensatz angenommenen Bewegungspfad, und die Zwischendatensätze der Referenzdaten können anhand dieses Abstandsmaße in einer vorgegebenen Qualitätsrangfolge geordnet sein.

Wird nun durch den Vergleichsalgorithmus das Qualitätsmaß für einen ersten und einen zweiten der Zwischendatensätze ermittelt und anschließend der Grenzwertevergleich für einen gegebenen Grenzwerte durchgeführt, so kann zwischen verschiedenen Fällen unterschieden werden. Die Verbindung aus Vergleichsalgorithmus und Grenzwertvergleich prüft im Beispiel, ob die Bildqualität des ersten Zwischendatensatzes größer ist als die Bildqualität des zweiten Zwischendatensatzes. Ist dies der Fall, so ist das Vergleichsergebnis positiv, anderenfalls negativ.

Wird nun der erste Zwischendatensatz so gewählt, dass er in der Qualitätsrangfolge der Referenzdaten vor dem zweiten Zwischendatensatz steht, kann die höhere Bildqualität korrekt erkannt werden, womit der erste Zwischendatensatz auch durch den Sortieralgorithmus vor dem zweiten Zwischendatensatz angeordnet wird. Dieses Ergebnis kann als Richtig-Positiv-Ergebnis bezeichnet werden. Ein umgekehrtes Ergebnis, also eine Fehlerkennung, kann in diesem Fall als Falsch-Negativ-Ergebnis betrachtet werden.

Ist hingegen in der Qualitätsrangfolge der Referenzdaten der zweite Zwischendatensatz vor dem ersten Zwischendatensatz angeordnet und resultiert die gleiche Anordnung auch durch den Sortieralgorithmus, so kann dies als Richtig-Negativ-Ergebnis bewertet werden. Eine fehlerhafte Sortierung kann diesem Fall als Falsch-Positiv-Ergebnis betrachtet werden.

Die Sensitivität beziehungsweise die Richtig-Positiv-Rate kann als Quotient aus der Anzahl der Richtig-Positiv-Ereignisse und der Summe der Anzahlen der Richtig-Positiv-Ereignisse und der Falsch-Negativ-Ereignisse berechnet werden.

Die Falsch-Positiv-Rate kann als Quotient aus der Anzahl der Falsch-Positiv-Ereignisse und der Summe der Anzahlen der Falsch-Positive-Ereignisse und der Richtig-Negativ-Ereignisse berechnet werden.

Als die Statistikinformation kann eine Statistikinformation verwendet werden, die auf einer ersten und zweiten Teilstatistik basiert, wobei die erste und zweite Teilstatistik jeweils eine Häufigkeitsverteilung der relativen Qualitätsmaße bei Anwendung des Vergleichsalgorithmus auf Paare eines jeweiligen durch die Referenzdaten vorgegeben ersten und zweiten Zwischendatensatzes beschreibt, wobei im Falle der ersten Teilstatistik die Zwischendatensätze des jeweiligen Paares derart aus den Referenzdaten ausgewählt sind, dass die Bildqualität des ersten Zwischendatensatzes höher als die Bildqualität des zweiten Zwischendatensatzes ist, und wobei im Falle der zweiten Teilstatistik die Zwischendatensätze des jeweiligen Paares derart aus den Referenzdaten ausgewählt sind, dass die Bildqualität des ersten Zwischendatensatzes niedriger als die Bildqualität des zweiten Zwischendatensatzes ist.

Die Statistikinformation kann prinzipiell direkt durch beide Teilstatistiken gebildet sein. Die Teilstatistiken bilden überlappende Verteilungen, typischerweise zwei Gaußkurven. Bei gegebenem Grenzwert ist die Richtig-Positiv-Rate und die Falsch-Positiv-Rate unmittelbar aus diesen Verteilungen ermittelbar. Jener Teil der Verteilung der ersten Teilstatistik, der oberhalb des Grenzwertes liegt, beschreibt die Anzahl der Richtig-Positiv-Ereignisse und der unter dem Grenzwert liegende Teile diese Verteilung beschreibt die Anzahl der Falsch-Negative-Ereignisse. Jener Teil der Verteilung der zweiten Teilstatistik, der oberhalb des Grenzwertes liegt, beschreibt die Anzahl der Falsch-Positiv-Ereignisse und der unter dem Grenzwert liegende Teile diese Verteilung beschreibt die Anzahl der Richtig-Negative-Ereignisse.

Wird eine trainierte Funktion als Vergleichsalgorithmus genutzt, was später noch genauer diskutiert werden wird, können zum Training der trainierten Funktion genutzte Trainingsdatensätze beziehungsweise Teile hiervon als Referenzdaten verwendet werden.

Die Statistikinformation kann eine ROC-Kurve sein oder beschreiben, die den Zusammenhang zwischen der Richtig-Positiv-Rate und der Falsch-Positiv-Rate beschreibt. ROC-Kurven (ROC: englisch für "receiver operating characteristic", deutsch: Operationscharakteristik eines Beobachters), werden auch Grenzwertoptimierungskurven genannt. Sie ermöglichen bei der Wahl des Operationspunktes beziehungsweise Grenzwertes eine Abwägung zwischen Sensitivität und Spezifität.

Der jeweilige Grenzwert kann in den Iterationen derart gewählt sein, dass für wenigstens eine der Iterationen die Richtig-Positiv-Rate und/oder die Falsch-Positiv-Rate kleiner ist als in wenigstens einer vorangehenden Iteration, insbesondere als in allen vorangehenden Iterationen. Dies ermöglicht es, zunächst mit hoher Sensitivität und geringer Spezifität den Bereich des globalen Minimums aufzufinden und dann durch die Anpassung des Grenzwertes die Spezifizität zu erhöhen, um eine Konvergenz der Optimierung zu erreichen beziehungsweise diese zu beschleunigen.

Der Grenzwert beziehungsweise die Falsch-Positiv-Rate kann kontinuierlich oder schrittweise monoton abgesenkt werden, und somit insbesondere in einer späteren Iteration niemals größer sein als in vorangehenden Iterationen. Die Änderung des Grenzwertes kann zusätzlich oder alternativ zur Nummer des aktuellen Iterationsschrittes auch von den aktuellen Zwischendatensätzen abhängen. Beispielsweise kann in jeder Iteration oder jeweils nach mehreren Iterationen geprüft werden, ob mit dem aktuell genutzten Grenzwert weiterhin Verbesserungen für ein auf andere Weise ermitteltes Qualitätsmaß erreicht werden, und erst dann, wenn dies nicht mehr der Fall ist, kann der Grenzwert angepasst werden. Beispiele für andere relevante Qualitätsmaße werden später noch erläutert.

Der Eingangsdatensatz kann mehrere Teildatensätze umfassen, die zu zeitlich voneinander beabstandeten Aufnahmezeitpunkten erfasst sind, wobei die jeweilige Korrekturoperation eine zumindest teilweise Kompensation einer jeweiligen angenommenen Relativbewegung zwischen dem Untersuchungsobjekt und einem Erfassungsmittel, durch das die Teildatensätze erfasst sind, beispielsweise einem Röntgendetektor, ist oder umfasst. Unter einer teilweisen Kompensation soll insbesondere eine ausschließliche Kompensation beziehungsweise Teilkompensation einer ungeplanten Relativbewegung verstanden werden. Beispielsweise kann eine Gesamtrelativbewegung eine Überlagerung einer geplanten Relativbewegung, beispielsweise einer Bewegung eines C-Bogens oder CT-Scanners bzw. eines Patiententisches, und einer ungeplanten Relativbewegung, beispielsweise einer Patientenbewegung und/oder einer Bewegung aufgrund von mechanischen Toleranzen, Erschütterungen oder Ähnliches, sein.

Bei Annahme einer Bewegungsfreiheit bzw. bei ausschließlicher Berücksichtigung der geplanten Bewegung können beispielsweise bei einer Rekonstruktion von dreidimensionalen Bilddaten Bewegungsartefakte resultieren, beispielsweise Geisterbilder und/oder eine Unschärfe. Durch eine Bewegungskorrektur, die insbesondere bei der Rekonstruktion berücksichtigt wird aber ergänzend oder alternativ auch Einzelbilder korrigieren kann, können solche Bildstörungen vermieden oder zunächst reduziert werden. Entsprechende Korrekturverfahren sind an sich bekannt. Typischerweise müssen hierbei jedoch Korrekturparameter abgeschätzt werden, während diese im erfüllungsgemäßen Verfahren im Rahmen Iteration beziehungsweise Optimierung bestimmt werden können.

Die Erfassungsinformation kann einen Zeitabstand zwischen wenigstens zwei der Aufnahmezeitpunkte und/oder ein Bewegungsmaß für eine, insbesondere sensorische erfasste, Bewegung des Untersuchungsobjekts während der Erfassung des Eingangsdatensatzes vorgeben, wobei der Grenzwert in wenigstens einer der Iterationen in Abhängigkeit des Zeitabstandes und/oder des Bewegungsmaßes vorgegeben wird. Der Zeitabstand kann unmittelbar oder beispielsweise indirekt durch eine verwendete Messsequenz vorgegeben sein.

Das Bewegungsmaß kann direkt oder beispielsweise als Pfad, für den anschließend beispielsweise eine Pfadlänge als Bewegungsmaß bestimmt werden kann, oder als mittlere Geschwindigkeit oder Ähnliches als Teil der Erfassungsinformationen empfangen beziehungsweise aus dieser ermittelt werden. Eine sensorische Erfassung kann beispielsweise durch einen Abstandssensor, eine Kamera, eine an dem Untersuchungsobjekt angeordnete Lokalisierungseinrichtung oder einen dort angeordneten Bewegungs- oder Vibrationssensor erfasst werden. Insbesondere kann die Stärke der Bewegung als Bewegungsmaß ausgewertet werden.

Vorzugsweise wird bei Erkennen einer starken Bewegung oder bei einer langen Zeit zwischen Erfassungszeitpunkten zumindest für die erste Iteration eine höhere Sensitivität und somit eine geringere Spezifität gewählt, als bei geringer Bewegung beziehungsweise kurzem Zeitabstand.

Bei einem Erreichen oder einem Überschreiten eines jeweiligen Erfassungsgrenzwertes durch das Bewegungsmaß und/oder durch den Zeitabstand kann der jeweilige Qualitätsgrenzwert in wenigstens einer der Iterationen so gewählt werden, dass die Richtig-Positiv-Rate und/oder die Falsch-Positiv-Rate größer sind als für den Fall, dass der jeweilige Erfassungsgrenzwert nicht erreicht oder überschritten wird. Durch diese Wahl des Grenzwertes kann das Risiko verringert werden, dass die Optimierung in einem lokalen Minimum endet. Insbesondere kann eine derartige Wahl des Grenzwertes für die erste Iteration oder für mehrere erste Iterationen erfolgen und spätere Iterationen können einen Grenzwert nutzen, der zu einer demgegenüber geringeren Falsch-Positive-Rate führt.

Ergänzend oder alternativ kann der Grenzwert in Abhängigkeit des Eingangsdatensatzes beziehungsweise in Abhängigkeit von aus diesen rekonstruierten Bilddaten gewählt werden. Insbesondere kann auf Basis dieser Daten ein Maß für Störungen beziehungsweise Artefakte in dem Eingangsdatensatz beziehungsweise den rekonstruierten Bilddaten ermittelt werden und der Grenzwert kann in Abhängigkeit dieses Maßes gewählt werden. Bei Erkennung von stärkeren Störungen beziehungsweise Artefakten kann der Grenzwert so gewählt werden, dass die Richtig-Positiv-Rate und/oder die Falsch-Positive-Rate größer sind als für den Fall, dass dies nicht der Fall ist.

Die Erfassungsinformation kann zumindest zum Teil auf während der Erfassung des Eingangsdatensatzes erfassten Sensordaten beruhen und/oder auf einem zur Erfassung des Eingangsdatensatzes genutzten Messprotokoll basiert. Das Messprotokoll kann Informationen über Zeitabstände von Messungen, aber auch über potentielle Vibrationen und Ähnliches, geben. Sensordaten könne insbesondere dazu genutzt werden, eine Bewegung des Untersuchungsobjekts bezüglich der genutzten Erfassungseinrichtung zu erfassen beziehungsweise zu quantifizieren, wie bereits obiger erläutert wurde.

Für wenigstens eine der Iterationen kann durch einen von dem Vergleichsalgorithmus unterschiedlichen Qualitätsermittlungsalgorithmus ein weiteres, insbesondere absolutes, Qualitätsmaß für wenigstens einen der Zwischendatensätze der in dieser oder in der dieser vorangehenden Iteration genutzten modifizierten Zwischendatensatzgruppe ermittelt werden, wobei der in dieser Iteration genutzte Qualitätsgrenzwert von dem weiteren Qualitätsmaß abhängt. Insbesondere kann eine Änderung des weiteren Qualitätsmaßes gegenüber einem zuvor ermittelten entsprechenden weiteren Qualitätsmaß und/oder das weitere Qualitätsmaß selbst mit einem vorgegebenen Grenzwert verglichen werden. Wird erkannt, dass sich das weitere Qualitätsmaß im Rahmen der Iterationen kaum noch ändert beziehungsweise wird auf Basis des weiteren Qualitätsmaß erkannt, dass eine hinreichend gute Bildqualität vorliegt, kann der Grenzwert angepasst werden, um durch Erhöhung der Richtig-Positiv-Rate eine schnellere Konvergenz der Optimierung zu erreichen und/oder um zu erreichen, dass das tatsächliche Optimum mit möglichst guter Genauigkeit erreicht wird.

Als weiteres Qualitätsmaß kann beispielsweise eine Epipolarkonsistenz und/oder eine Qualität der Registrierung von zweidimensionalen Bilddaten zu einem rekonstruierten 3D-Bild ausgewertet werden. Ergänzend oder alternativ können beispielsweise eine Grauwerthistogrammentropie und/oder eine totale Variation als weiteres Qualitätsmaß berücksichtigt werden. Verfahren zur Ermittlung der genannten weiteren Qualitätsmaße sind für sich genommen im Stand der Technik hinreichend bekannt und sollen daher nicht im Detail erläutert werden.

Als Vergleichsalgorithmus kann eine durch Maschinenlernen trainierte Funktion verwendet werden. Hierbei kann insbesondere ein überwachtes Training auf Basis von vorgegebenen Trainingsdatensätze durchgeführt werden. Möglichkeiten zur Gewinnung geeigneter Trainingsdatensätze, die insbesondere gemäß ihrer Bildqualität geordnete Zwischendatensätze umfassenden, wurden bereits obiger mit Bezug zu den Referenzdaten erläutert, die zur Ermittlung der Statistikinformation genutzt werden können. Das Training kann beispielsweise durch Minimierung einer Kostenfunktion, insbesondere durch Fehlerrückführung, erfolgen. Die Kostenfunktion kann insbesondere der Kreuzentropie entsprechen oder diese, beispielsweise als Summand, umfassen. Das Training der trainierten Funktionen ist vorzugsweise vollständig abgeschlossen, bevor die obige erläuterte Statistikinformation ermittelt wird.

Im Allgemeinen bildet eine trainierte Funktion kognitive Funktionen ab, die Menschen mit anderen menschlichen Gehirnen assoziieren. Durch Training basierend auf Trainingsdaten (Maschinenlernen) ist die trainierte Funktion in der Lage, sich an neue Umstände anzupassen und Muster zu detektieren und zu extrapolieren.

Allgemein gesagt können Parameter einer trainierten Funktion durch Training angepasst werden. Insbesondere können überwachtes Lernen, halbüberwachtes Lernen, nicht überwachtes Lernen, Reinforcement Learning und/oder aktives Lernen verwendet werden. Darüber hinaus kann auch Repräsentationslernen (auch als "feature learning" bekannt) eingesetzt werden. Die Parameter der trainierten Funktion können insbesondere iterativ durch mehrere Trainingsschritte angepasst werden.

Eine trainierte Funktion kann beispielsweise ein neuronales Netz, eine Support Vector Machine (SVM), einen Entscheidungsbaum und/oder ein Bayes-Netzwerk umfassen und/oder die trainierte Funktion kann auf k-means-Clustering, Q-Learning, genetischen Algorithmen und/oder Zuordnungsregeln basieren. Insbesondere kann ein neuronales Netzwerk ein tiefes neuronales Netzwerk, ein Convolutional Neural Network (CNN) oder ein tiefes CNN sein. Darüber hinaus kann das neuronale Netzwerk ein Adversarial Network, ein tiefes Adversarial Network und/oder ein Generative Adversarial Network (GAN) sein.

Zudem betrifft die Erfindung eine Vorrichtung gemäß Anspruch 13, ein Computerprogramm nach Anspruch 14 sowie einen Datenträger nach Anspruch 15.

Merkmale, die zu den einzelnen Verfahren beziehungsweise Gegenständen erläutert wurden, können mit den genannten Vorteilen auch auf die jeweils anderen Erfindungsgegenstände übertragen werden.

Weitere Vorteile und Einzelheiten der Erfindung ergeben sich aus den folgenden Ausführungsbeispielen sowie den zugehörigen Zeichnungen. Hierbei zeigen schematisch:

Fig. 1 ein Ablaufdiagramm eines Ausführungsbeispiels des erfindungsgemäßen Verfahrens zur Bereitstellung eines Ausgangsdatensatzes,

Fig. 2 ein Ausführungsbeispiel einer erfindungsgemäßen Vorrichtung, die im Beispiel mit einer medizinischen Bildgebungseinrichtung zusammenwirkt,

Fig. 3 ein Ablaufdiagramm eines Ausführungsbeispiels des erfindungsgemäßen Verfahrens zur Ermittlung der Statistikinformation, und

Fig. 4&5 vereinfachte schematische Darstellungen von trainierten Funktionen, die im erfindungsgemäßen Verfahren als Vergleichsalgorithmus nutzbar sind.

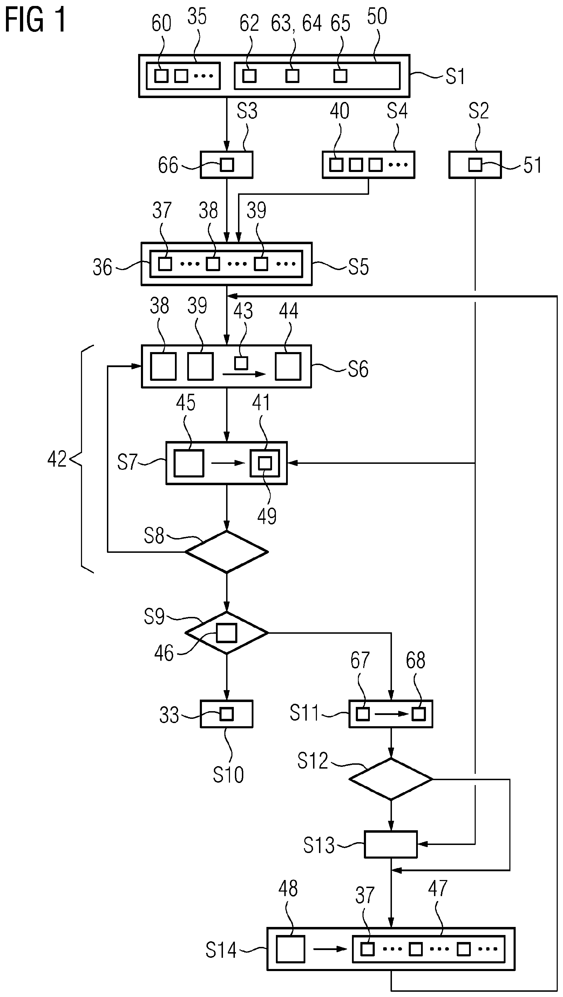

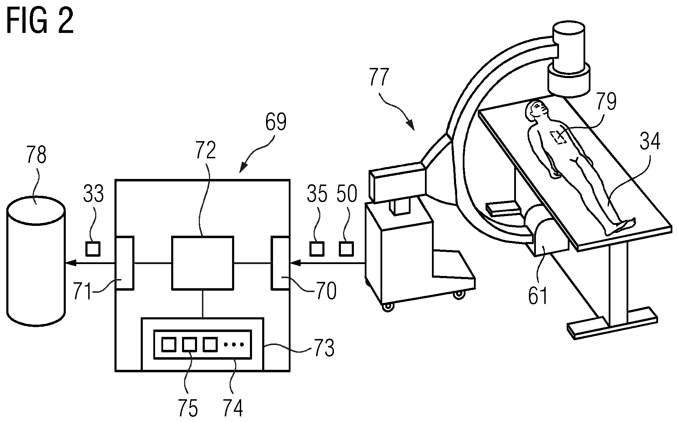

Figur 1 zeigt ein Ablaufdiagramm eines Verfahrens zur Bereitstellung eines Ausgangsdatensatzes 33 auf Basis eines Eingangsdatensatzes 35, der ein Untersuchungsobjekt 34 betrifft. Der Eingangsdatensatz 35 kann insbesondere durch eine medizinische Bildgebungseinrichtung 77 bereitgestellt werden, wie sie beispielhaft in Figur 2 dargestellt ist. Figur 2 zeigt hierbei zudem eine Vorrichtung 69 zur Implementierung des erläuterten Verfahrens.

Wie im Folgenden noch genauer erläutert werden wird, erfolgt in dem Verfahren eine Optimierung einer Korrektur, beispielsweise eine Minimierung von Bewegungsartefakten oder anderen Artefakten oder Störungen in aus dem Eingangsdatensatz ermittelten Bilddaten. Im Rahmen der Optimierung werden hierbei in mehreren Iterationen jeweils Zwischendatensätze 37, 38,39, die durch verschiedene Korrekturoperationen 40 aus dem Eingangsdatensatz 35 generiert wurden, gemäß der erreichten Bildqualität geordnet, um die Korrekturen geeignet anzupassen.

Im Rahmen des Sortieralgorithmus 42 wird hierzu eine Kombination aus der Ermittlung eines relativen Qualitätsmaßes 44 für einen paarweisen Vergleich von mehreren Paaren eines jeweiligen ersten und zweiten Zwischendatensatzes 38,39 mit einem Vergleich des Qualitätsmaßes 44 mit einem Qualitätsgrenzwert 45 genutzt. Durch die Wahl unterschiedlicher Qualitätsgrenzwerte 45 in verschiedenen Iterationen und/oder durch eine Abhängigkeit des Qualitätsgrenzwertes 45 von dem Eingangsdatensatz 35 beziehungsweise von optional mit diesem bereitgestellten Erfassungsinformationen 50, die eine Eigenschaft der Erfassung des Eingangsdatensatz 35 betreffen, kann erreicht werden, dass gegenüber der Nutzung von einem festen Qualitätsgrenzwert bei einer solchen Optimierung die Wahrscheinlichkeit einer Optimierung auf ein ausschließlich lokales Optimum deutlich reduziert werden kann und zugleich eine robuste Konvergenz der Optimierung erreicht werden kann.

In dem gezeigten Ausführungsbeispiel werden in Schritt S1 zunächst der Eingangsdatensatz 35 und optional die Erfassungsinformationen 50 über die Eingangsschnittstelle 70 empfangen. Im gezeigten Beispiel erfolgt der Empfang direkt von einer medizinischen Bildungseinrichtung 77. Alternativ wäre es jedoch beispielsweise auch möglich, den Eingangsdatensatz von einem Server, aus einer Datenbank oder aus anderen Quellen abzurufen beziehungsweise von diesen zu empfangen.

Im gezeigten Beispiel umfasst der Eingangsdatensatz mehrere Teildatensätze 60, nämlich beispielsweise Projektionsbilder, die eine jeweilige Röntgenaufnahme des Untersuchungsobjekt 34 darstellen. Die Teildatensätze 60 sind zu voneinander unterschiedlichen Aufnahmezeitpunkten aufgenommen, sodass beispielsweise durch Bewegung des Untersuchungsobjekt 34 zwischen diesen Aufnahmezeitpunkten Bewegungsartefakte entstehen können, die im erläuterten Verfahren minimiert werden können.

Die Korrekturoperation 40 soll im Beispiel neben der Anwendung von Korrekturen auch eine Rekonstruktion eines dreidimensionalen Bilddatensatzes aus diesen Projektionsbildern umfassen. Wie bereits im allgemeinen Teile detailliert dargestellt wurde, ist es hierbei möglich, dass ausschließlich die zweidimensionalen Bilddaten korrigiert werden und/oder das die Rekonstruktion der dreidimensionalen Bilddaten in Abhängigkeit der Korrektur angepasst wird.

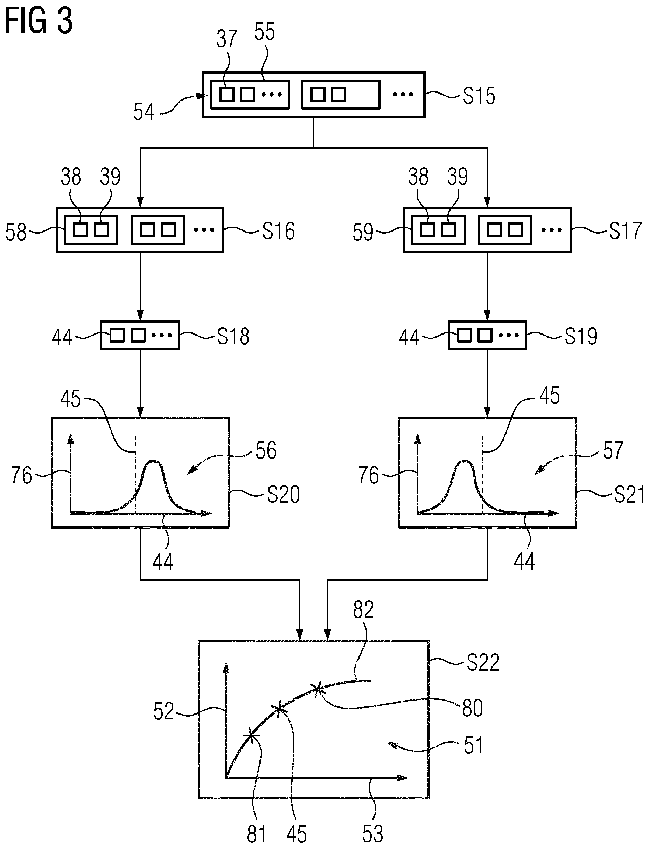

Im Schritt S2 kann optional eine Statistikinformation 51 bereitgestellt werden, die einen Zusammenhang des in dem Sortieralgorithmus 42 zu nutzenden Qualitätsgrenzwertes 45 mit der Falsch-Positiv-Rate, die der Subtraktion der Selektivität von eins entspricht, beziehungsweise der Richtig-Positiv-Rate, also der Sensitivität, der Sortierung der Zwischendatensätze 38,39 beschreibt. Die Berücksichtigung einer solchen Statistikinformation bei einer Anpassung beziehungsweise Wahl des Qualitätsgrenzwertes ist vorteilhaft, da hierdurch eine möglichst optimale Selektivität und Sensitivität erreicht werden kann, wobei zugleich situationsgerecht abgewogen werden kann, ob eine Selektivität oder eine Sensitivität im aktuellen Optimierungsschritt relevanter sind. Wie bereits im allgemeinen Teil erläutert wurde, kann beispielsweise eine gewichtete Summe aus Sensitivität und Selektivität maximiert werden, wobei die Gewichtungsfaktoren situationsgerecht gewählt werden können. Eine Möglichkeit zur Ermittlung einer geeigneten Statistikinformation 51 wird später noch mit Bezug auf Figur 3 erläutert werden.

In Schritt S3 kann optional bereits eine Anpassung des später im Rahmen des Sortieralgorithmus 42 genutzten Qualitätsgrenzwertes erfolgen. Hierzu kann beispielsweise ein Zeitabstand 62 zwischen den Aufnahmezeitpunkten und/oder ein Bewegungsmaß 63 für die Bewegung des Untersuchungsobjekt 34 mit einem Erfassungsgrenzwert 66 verglichen werden. Bei einer Grenzwertüberschreitung kann dann ein andere Qualitätsgrenzwert 45 gewählt werden, der insbesondere zur einer höheren Richtig-Positiv-Rate der Bestimmung der Reihenfolge 49 der verglichenen ersten und zweiten Zwischendatensätze 38,39 führen kann, als der Qualitätsgrenzwert 45, der ohne diese Grenzwertüberschreitung genutzt würde.

Das Bewegungsmaß 63 kann insbesondere auf Sensordaten 64 eines Sensors 79 basieren, der Bewegungen des Untersuchungsobjekt 34 erfasst. Der in Figur 2 gezeigt Sensor kann beispielsweise ein Erschütterungssensor oder Teil eine Positionsbestimmungseinrichtung sein. Alternativ oder ergänzend können das Bewegungsmaß 63 und/oder der Zeitabstand 62 auch einem Meßprotokoll 65 entnommen oder auf Basis von diesem ermittelt werden, das als Teil der Erfassungsinformationen 50 empfangen werden kann.

In Schritt S4 werden eine Vielzahl von Korrekturoperationen 40 bereitgestellt, durch deren Anwendung auf den Eingangsdatensatz 35 beziehungsweise dessen Teildatensätze 60 die Zwischendatensätze 37, 38,39 in Schritt S5 generiert werden. Die in Schritt S5 generierten Zwischendatensätze 37, 38,39 bilden eine initiale Zwischendatensatzgruppe 36.

Die Korrekturoperationen 40 können insbesondere alle durch den gleichen Korrekturalgorithmus implementiert sein, der jedoch zur Erzeugung der unterschiedlichen Zwischendatensätze 37, 38,39 voneinander unterschiedlich parametrisiert wird. Somit können sich die Korrekturoperationen 40 insbesondere ausschließlich bezüglich des Werts des wenigstens einen Korrekturparameters unterscheiden. Beispielsweise können unterschiedliche angenommene Bewegungskurven für eine Bewegungskorrektur, beispielsweise als Spline-Kurven, definiert werden und deren Parameter oder/oder die Zuordnung unterschiedlicher Punkte einer Bewegungskurve zu unterschiedlichen Zeitpunkten, beispielsweise eine Bewegungsgeschwindigkeit, können als Korrekturparameter variiert werden, um unterschiedliche Korrekturoperationen bereitstellen.

Der durch die folgenden Schritte S6-S8 implementierte Sortieralgorithmus 42 dient dazu, die Zwischendatensätze 37, 38, 39 der initialen Zwischendatensatzgruppe 36 beziehungsweise in späteren Iterationen der modifizierten Zwischendatensatzgruppe 47 gemäß ihrer Bildqualität zu ordnen. Da eine Ermittlung einer relativen Bildqualität zwischen zwei Zwischendatensätzen beziehungsweise eines relativen Qualitätsmaßes 44 hierfür erheblich robuster und bei Verwendung einer trainierten Funktionen als Vergleichsalgorithmus 43, der das relative Qualitätsmaß ermittelt, mit erheblich geringerem Trainingsaufwand möglich ist, als die Ermittlung eines absoluten Qualitätsmaßes, basiert die Sortierung der Zwischendatensätze 37, 38, 39 auf einem wiederholten paarweisen Vergleich von unterschiedlichen Paaren eines jeweiligen ersten und zweiten Zwischendatensatzes 38,39. Sortieralgorithmen, die auf paarweisen Vergleichen basieren, sind wohl bekannt, wie bereits im allgemeinen Teil erläutert wurde.

Hierzu wird zunächst in Schritt S6 der Vergleichsalgorithmus 43 auf einen ersten und zweiten der Zwischendatensätze 38,39 angewandt, um für dieses Paar eine relatives Qualitätsmaß 44 zu ermitteln. Beispielsweise kann das relative Qualitätsmaß umso positiver sein, je besser die Bildqualität des ersten Zwischendatensatzes bezüglich des zweiten Zwischendatensatzes ist. Eins negatives relatives Qualitätsmaß 44 kann beispielsweise indizieren, dass die Bildqualität des ersten Zwischendatensatzes 38 schlechter ist als die Bildqualität des zweiten Zwischendatensatzes 39.

Da das relative Qualitätsmaß 44 jedoch fehlerbehaftet sein kann, wird im Anschluss in Schritt S7 das ermittelte relative Qualitätsmaß 44 mit dem Qualitätsgrenzwert 45 verglichen, um die Reihenfolge 49 des ersten und zweiten Zwischendatensatzes 38,39 in der ermittelten Qualitätsrangfolge 41 festzulegen. Wird der Qualitätsgrenzwert 45 durch das relative Qualitätsmaße 44 überschritten, wird im Beispiel der erste Zwischendatensatz 38 in der Qualitätsrangfolge 41 vor dem zweiten Zwischendatensatz und 39 angeordnet.

In Schritt S8 wird anschließend geprüft, ob durch die vorangehenden paarweisen vergleiche die Qualitätsrangfolge 41 bereits eindeutig festgelegt ist. Ist dies nicht der Fall, so wird das Verfahren ab Schritt S6 wiederholt, um ein weiteres Paar aus einem ersten und zweiten Zwischendatensatz 38,39 zu vergleichen. Die Auswahl, welcher erste und zweite Zwischendatensatz 38,39 jeweils verglichen werden, hängt vom genutzten Sortieralgorithmus ab.

Nach Abschluss der Sortierung der Zwischendatensätze 37, 38,39 wird in Schritt S9 geprüft, ob eine Abbruchbedingung 46 erfüllt ist. Im einfachsten Fall kann die Abbruchbedingung 46 erfüllt sein, wenn eine vorgegebene Anzahl von Iterationen, in denen, jeweils, wie später noch erläutert wird, eine modifizierter Zwischendatensatzgruppe 47 generiert wird, durchlaufen wurden. Bevorzugt wird jedoch eine Konvergenz geprüft, die anhand der zuletzt genutzten modifizierten Zwischendatensatzgruppe 47 prüft, ob bereits eine Konvergenz an einem Optimum erfolgt ist. Beispielsweise kann eine solche Konvergenz festgestellt werden, wenn das relative Qualitätsmaß zwischen dem ersten und einem weiteren, beispielsweise dem letzten, Zwischendatensatz in der Qualitätsrangfolge 41 einen Grenzwert unterschreitet, und somit keine wesentlichen Qualitätsunterschiede zwischen den Zwischendatensätzen mehr erkannt werden können.

Ist die Abbruchbedingung 46 erfüllt, so wird in Schritt S7 im einfachsten Fall der erste Zwischendatensatz der Qualitätsrangfolge 41 als Ausgangsdatensatz 33 bereitgestellt. Das erläuterte Verfahren stellt in diesem Fall bereits unmittelbar qualitätsoptimierte Bilddaten als Ausgangsdatensatz bereit.

Wie bereits im allgemeinen Teil erläutert wurde, kann es jedoch auch zweckmäßig sein, zunächst nur den wenigstens einen Korrekturparameter als Ausgangsdatensatz bereitzustellen. Dies ermöglicht es, die Bildverarbeitung beziehungsweise Bildrekonstruktion separat von der Optimierung der Korrekturoperation beziehungsweise des wenigstens einen Korrekturparameters durchzuführen, womit beispielsweise im Rahmen der Optimierung und der endgültigen Bildbereitstellung abgesehen von den Korrekturparametern eine voneinander unterschiedliche Parametrisierung erfolgen kann oder sogar unterschiedliche Algorithmen nutzbar sind, sodass beispielsweise eine Nutzung unterschiedlicher Bildauflösungen beziehungsweise Voxelgrößen ermöglicht wird.

Ist die Abbruchbedingung 46 hingegen nicht erfüllt, so werden die Schritte S11 bis S14 durchlaufen und anschließend das Verfahren ab Schritt S6 fortgesetzt.

Zentral ist hierbei die Bereitstellung eine modifizierten Zwischendatensatzgruppe 47 in Schritt S14. Diese umfasst wenigstens einen Zwischendatensatz 37, der von der Qualitätsrangfolge 41 abhängt. Im Beispiel wird der Korrekturalgorithmus mit wenigstens einem modifizierten Korrekturparametersatz parametrisiert, um eine jeweilige modifizierte Korrekturoperation 48 bereitzustellen, die auf den Eingangsdatensatz 35 beziehungsweise dessen Teildatensätze 60 angewandt wird, um einen jeweiligen modifizierten Zwischendatensatz 37 zu generieren. Die Modifikation der Parametrisierung erfolgt vorzugsweise durch das Simplex-Downhill-Verfahren, wie bereits im allgemeinen Teil erläutert wurde. Hierbei wird im Parameterraum des Korrekturalgorithmus ein Mittelpunkt für alle Zwischendatensätze bis auf den letzten Zwischendatensatz der Ordnungsrangfolge ermittelt und wenigstens einen modifizierten Parametersatz in Abhängigkeit der Lage dieses Punktes generiert. Dieses Verfahren ist an sich wohl bekannt und es soll daher nur kurz ein Überblick über eine mögliche Implementierung zur Ermittlung der modifizierten Zwischendatensatzgruppe gegeben werden:

Zunächst wird ein Zwischenpunkt ermittelt, der im Parameterraum auf der Verbindungslinie zwischen dem Mittelpunkt und dem Parametersatz für den letzten Zwischendatensatz der Ordnungsrangfolge liegt. Der Abstand des Zwischenpunkts von dem Mittelpunkt ist mit einem vorgegebenen Skalierungsfaktor, der kleiner als eins ist, proportional zum Abstand des Mittelpunkts zum Parametersatz des letzten Zwischendatensatzes der Ordnungsrangfolge.

Führt eine Korrektur gemäß dieses Zwischenpunktes zu einem neuen Zwischendatensatz, der in der Ordnungsrangfolge zwischen dem ersten und vorletzten Zwischendatensatz angeordnet wäre, wird der letzte Zwischendatensatz durch den neuen Zwischendatensatz ersetzt um die modifizierte Zwischendatensatzgruppe zu bilden.

Würde der neue Zwischendatensatz hingegen in der Qualitätsrangfolge an erster Position angeordnet werden, so wird ein außenliegender Punkt im Parameterraum bestimmt, der auf der Verbindungsgerade zwischen dem Zwischenpunkt und dem Mittelpunkt liegt, wobei der Abstand vom Mittelpunkt mit einem weiteren Skalierungsfaktor, der größer als eins ist, zu dem Abstand zwischen Mittelpunkt und Zwischenpunkt proportional ist. Somit liegt der außenliegende Punkt bezüglich des Mittelpunkts jenseits des Zwischenpunktes.

Würde ein äußerer Zwischendatensatz, der aus der Parametrisierung des Korrekturalgorithmus gemäß dem außenliegenden Punkt resultiert, in der Ordnungsrangfolge vor dem neuen Zwischendatensatz angeordnet, so wird der letzte Zwischendatensatz durch den äußeren Zwischendatensatz ersetzt und anderenfalls wird der letzte Zwischendatensatz durch den neuen Zwischendatensatz ersetzt, um die modifizierte Zwischendatensatzgruppe zu bilden.

Wäre der neue Zwischendatensatz hingegen in der Ordnungsrangfolge nach dem vorletzten Zwischendatensatz angeordnet, so wird bei Anordnung des neuen Zwischendatensatzes vor dem letzten Zwischendatensatz in der Qualitätsrangfolge der Zwischenpunkt und bei Anordnung des neuen Zwischendatensatzes nach dem letzten Zwischendatensatz der der dem letzten Zwischendatensatz zugeordneten Korrektur zugeordnete Punkt im Parameterraum als Referenzpunkt gewählt. Als kontrahierter Punkt wird dann ein Punkt auf der Verbindungslinie zwischen dem Referenzpunkt und dem Mittelpunkt gewählt, der vorzugsweise näher am Mittelpunkt liegt als am Referenzpunkt.

Ist ein Zwischendatensatz, der durch Korrektur gemäß dem kontrahierten Punkt berechnet wird, in der Qualitätsrangfolge vor dem gemäß dem Referenzpunkt berechneten Zwischendatensatz angeordnet, so wird die modifizierte Zwischendatensatzgruppe gebildet, indem der letzte Zwischendatensatz durch den gemäß dem Referenzpunkt berechneten Zwischendatensatz ersetzt wird.

Anderenfalls werden alle Zwischendatensätze außer dem ersten Zwischendatensatz der Ordnungsrangfolge durch modifizierte Zwischendatensätze ersetzt, indem eine Korrektur durch eine jeweilige Parametrisierung erfolgt, die im Parameterraum zwischen der Parametrisierung für den bisherigen Zwischendatensatz und dem Mittelpunkt liegt, um die modifizierte Zwischendatensatzgruppe zu bilden.

Wie bereits im allgemeinen Teil erläutert wurde, kann der Qualitätsgrenzwert 45 für verschiedene Iterationen verschieden gewählt werden. Im einfachsten Fall wäre es beispielsweise möglich, den Qualitätsgrenzwert 45 nach einer vorgegebenen Anzahl von Iterationen derart zu verändern, dass eine geringere Falsch-Positiv-Rate resultiert und somit eine robuste Konvergenz erreicht wird.

Im gezeigten Beispiel wird stattdessen einen Ansatz genutzt, bei dem zunächst in Schritt S11 ein von dem Vergleichsalgorithmus 43 unterschiedlicher Qualitätsermittlungsalgorithmus 67 genutzt wird, um ein weiteres, insbesondere absolutes, Qualitätsmaß für wenigstens einen der Zwischendatensätze 37, 38,39 zu ermitteln. Kandidaten für den Qualitätsermittlungsalgorithmus 67 wurden bereits im allgemeinen Teil diskutiert.

In Schritt S12 wird dann geprüft, ob das weitere Qualitätsmaß 68 einen vorgegebenen Grenzwert überschreitet. Ist dies der Fall, so wird in Schritt S 13 der Qualitätsgrenzwert 45 für die folgende Iterationen derart verändert, dass eine niedrigere Falsch-Positiv-Rate resultiert. Diese Wahl ist dadurch motiviert, dass in diesem Fall davon ausgegangen werden kann, dass durch die vorangegangenen Iterationen bereits eine Parametrisierung der Korrektur im Bereich des globalen Minimums erreicht wurde und somit nun durch eine höhere Selektivität das tatsächliche Minimum aufgefunden werden soll.

Liegt das weitere Qualitätsmaß 68 in Schritt S12 hingegen unterhalb des Grenzwertes, so wird in den nächsten Iterationen zunächst der gleiche Qualitätsgrenzwert 45 weiterverwendet, sodass Schritt S13 übersprungen wird.

Durch die beschriebene Berücksichtigung von Eigenschaften des Eingangsdatensatz 32 selbst und/oder der Erfassungsinformationen 50 beziehungsweise durch die Veränderung des Qualitätsgrenzwertes 45 zwischen den Iterationen kann eine Optimierung auf ein nur lokales Optimum in der Regel vermieden werden und es wird zugleich eine robuste Konvergenz der Optimierung erreicht.

Eine zur Implementation des beschriebenen Verfahrens geeignete Vorrichtung 69 ist in Figur 2 dargestellt. Die Vorrichtung umfasst hierbei eine Eingangsschnittstelle 70 zur Bereitstellung des Eingangsdatensatzes 35 und optional der Erfassungsdaten 50, eine Ausgangsschnittstelle 71 zur Ausgabe des Ausgangsdatensatzes und eine Verarbeitungseinrichtung 72, die beispielsweise programmierbar sein kann, sodass die Schritte des Verfahrens durch ein Computerprogramm 74 beziehungsweise dessen Anweisungen 75 implantiert sein können, die in einem Speicher 73 der Vorrichtung 69 abgelegt sind. Der Speicher 73 könnte ein Datenträger sein, der das Computerprogramm 74 dauerhaft speichert, oder auch ein flüchtiger Speicher, beispielsweise ein RAM-Speicher.

Im Beispiel ist die Eingangsschnittstelle 70 mit einer medizinischen Bildgebungseinrichtung 77 verbunden. Die Erfassung des Eingangsdatensatzes 35 beziehungsweise von dessen Teildatensätzen 60, insbesondere von Projektionsbildern, erfolgt durch ein Erfassungsmittel 61, das im Beispiel eine Röntgendetektor ist. Die Bildgebungseinrichtung 77 umfasst zudem einen Sensor 79 zur Erfassung von Bewegungen des Untersuchungsobjekts 34.

Der Ausgangsdatensatz 33 wird im Beispiel in einer externen Datenbank 78 gespeichert. Alternativ oder ergänzend könnte er jedoch auch für einen Nutzer visualisiert werden, zu einem Arbeitsplatzrechner übertragen werden oder Ähnliches.

Im Beispiel sind die Eingangsschnittstelle 70 und die Ausgabeschnittstelle 71 als physikalische Schnittstellen dargestellt. Prinzipiell könnte sich jedoch auch um Softwareschnittstellen handeln, beispielsweise wenn der Eingangsdatensatz durch einen internen Speicher der Vorrichtung, beispielsweise aus einer dort gespeicherten Datenbank, bereitgestellt wird, beziehungsweise wenn der Ausgangsdatensatz 33 unmittelbar in der Vorrichtung 69 weiterverwendet werden soll, beispielsweise dort visualisiert wird oder genutzt wird um andere Prozess zu parametrisieren. Die Weiterverarbeitung kann beispielsweise eine Verarbeitung des Eingangsdatensatzes unter Verwendung der als Teil des Ausgangsdatensatzes ermittelten Korrekturparameter umfassen.

Die Vorrichtung 69 könnte ergänzend oder alternativ auch dezentral implementiert sein, beispielsweise als Cloud-Lösung.

Eine Möglichkeit zu Ermittlung der im Verfahren gemäß Figur 1 genutzten Statistikinformation 41 wird im Folgenden mit Bezug auf Figur 3 näher erläutert.

In Schritt S 15 werden zunächst Referenzdaten 54 bereitgestellt. Bei den Referenzdaten 54 kann es sich insbesondere um die gleichen Trainingsdaten handeln, die auch bei einem Training des Vergleichsalgorithmus 43 durch Maschinenlernen genutzt wurden. Unabhängig davon können die einzelnen Trainingsdatensätze 55 jeweils eine Vielzahl von jeweiligen Zwischendatensätzen 37 umfassen, die auf Basis der gleichen Ursprungsdaten generiert sind, wobei innerhalb des jeweiligen Trainingsdatensatzes die korrekte Qualitätsrangfolge und/oder ein absolutes Maß für die Bildqualität des jeweiligen Zwischendatensatzes und/oder Referenzwerte für relative Bildqualitäten der möglichen Paare bekannt sind.

Somit können in Schritt S16 jeweilige Paare eines ersten und zweiten Zwischendatensatzes 38, 39 gebildet werden, die dem gleichen Trainingsdatensatz 55 entstammen und für die bekannt ist, dass die Bildqualität des ersten Zwischendatensatzes 38 größer ist als die Bildqualität des zweiten Zwischendatensatzes 39.

In Schritt S17 könne entsprechend Paare von ersten und zweiten Zwischendatensätzen 38,39 gebildet werden, die zwar ebenfalls dem gleichen Trainingsdatensatz 55 entstammen, bei denen jedoch die Bildqualität des ersten Zwischendatensatzes 38 bekanntermaßen geringer als die Bildqualität des zweiten Zwischendatensatzes 39 ist.

In den Schritten S18 und S19 werden für die in den Schritten S16 beziehungsweise S17 gebildeten Paare 58, 59 jeweils durch Anwendung des Vergleichsalgorithmus 43 relative Qualitätsmaße 44 bestimmt.

In Schritt S20 wird eine erste Teilstatistik 56 für die Häufigkeit 76 der in Schritt S18 ermittelten relativen Qualitätsmaße 44 ermittelt. Beispielhaft ist hierbei in Figur 3 ein Grenzwerte 45 eingezeichnet, wie er in dem Verfahren gemäß Figur 1 zur Festlegung der Ordnung 49 der jeweiligen verglichenen Zwischendatensätze 38,39 genutzt wird. Somit entspricht der Teil der ersten Teilstatistik 56 rechts des Grenzwertes 45 der Anzahl der Richtig-Positive-Ereignisse für diesen Grenzwerte 45 und der Teil links des Grenzwertes 45 der Anzahl der Falsch-Negativ-Ereignisse.

Entsprechend wird in Schritt S21 eine zweite Teilstatistik 57 für die in Schritt S19 ermittelten relativen Qualitätsmaße 44 ermittelt. Da es sich hierbei um relative Qualitätsmaße 44 für Paare 59 handelt, in denen die Reihenfolge des ersten und zweiten Zwischendatensatzes 38,39 anders ist als sie in der bekannten Qualitätsrangfolge ist, entspricht jener Teil der zweiten Teilstatistik 57 links des Grenzwertes 45 der Anzahl der Richtig-Negativ-Ereignisse und der Teil rechts des Grenzwertes 45 der Anzahl der Falsch-Positiv-Ereignisse.

Wie bereits im allgemeinen Teil erläutert wurde, kann somit in Schritt S22 beispielsweise eine ROC-Kurve 82 ermittelt werden. Wie in Figur 3 schematisch dargestellt ist, ist hierbei auf der X-Achse die Falsch-Positiv-Rate 53 und auf der Y-Achse die Richtig-Positiv-Rate 52 aufgetragen.

Der Grenzwert 45 kann auf der ROC-Kurve 82 frei gewählt werden. Wie bereits obig erläutert wurde, ist es zweckmäßig, bei starken Störungen im Eingangsdatensatz, beispielsweise bei einer voraussichtlichen starken Bewegung oder einer starken Unschärfe, beziehungsweise in den frühen Iterationsschritten Grenzwerte mit hoher Richtig-Positive-Rate 52 zu nutzen, beispielsweise den Grenzwert, der dem Punkt 80 entspricht, um eine Optimierung zu einem ausschließlich lokalen Minimum hin zu vermeiden. Bei späteren Iterationsschritten beziehungsweise bei geringen vorhandenen beziehungsweise erwarteten Störungen ist hingegen eine geringe Falsch-Positiv-Rate 53 zweckmäßig, um das Optimum mit hoher Genauigkeit und Robustheit zu bestimmen, sodass beispielsweise der Grenzwert gewählt werden kann, der dem Punktes 81 entspricht.

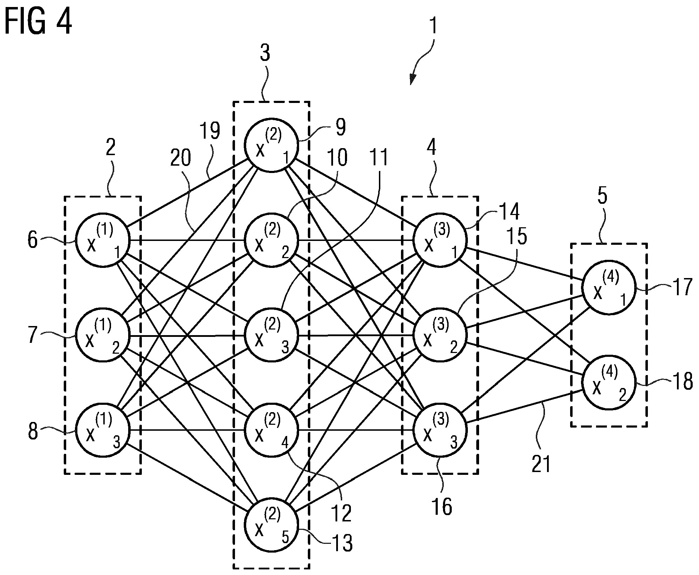

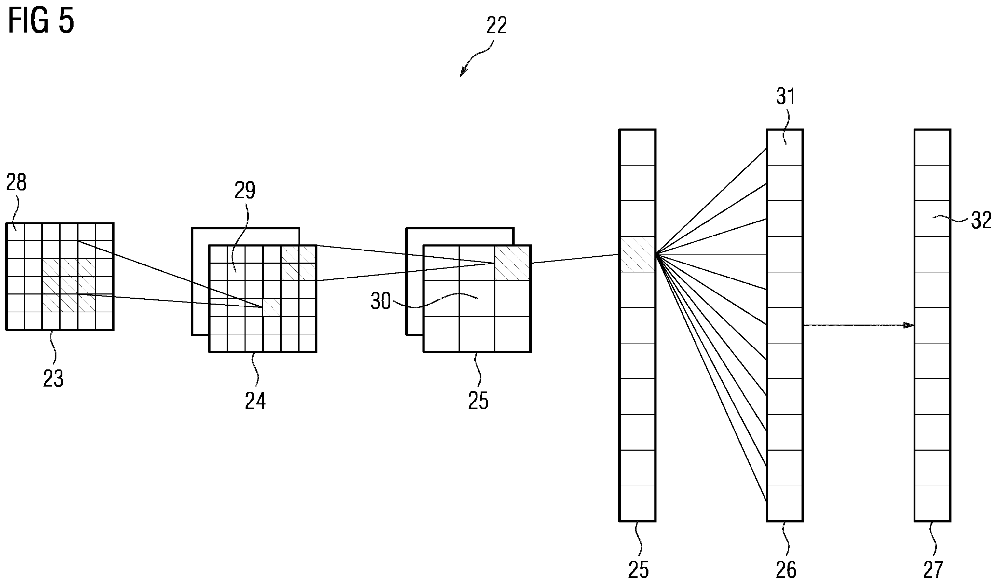

Wie bereits erläutert wurde, kann als Vergleichsalgorithmus 43 insbesondere ein durch Maschinenlernen trainierter Algorithmus verwendet werden. Zum besseren Verständnis der Erfindung werden daher im Folgenden mit Bezug auf Figuren 4 und 5 vereinfachte schematische Darstellungen von trainierten Funktionen diskutiert, die im erfindungsgemäßen Verfahren als Vergleichsalgorithmus 43 nutzbar sind.

Figur 4 zeigt ein Ausführungsbeispiel eines künstlichen neuronalen Netzes 1. Englische Ausdrücke für das künstliche neuronale Netz 1 sind "artificial neural network", "neural network", "artificial neural net" oder "neural net".

Das künstliche neuronale Netzwerk 1 umfasst Knoten 6 bis 18 (nodes) und Kanten 19 bis 21 (edges), wobei jede Kante 19 bis 21 eine gerichtete Verbindung von einem ersten Knoten 6 bis 18 zu einem zweiten Knoten 6 bis 18 ist. Im Allgemeinen sind der erste Knoten 6 bis 18 und der zweite Knoten 6 bis 18 unterschiedliche Knoten 6 bis 18, es ist jedoch auch denkbar, dass der erste Knoten 6 bis 18 und der zweite Knoten 6 bis 18 identisch sind. Beispielsweise ist in Figur 4 die Kante 19 eine gerichtete Verbindung von dem Knoten 6 zu dem Knoten 9 und die Kante 21 ist eine gerichtete Verbindung von dem Knoten 16 zu dem Knoten 18. Eine Kante 19 bis 21 von einem ersten Knoten 6 bis 18 zu einem zweiten Knoten 6 bis 18 wird als eingehende Kante ("ingoing edge") für den zweiten Knoten 6 bis 18 und als ausgehende Kante ("outgoing edge") für den ersten Knoten 6 bis 18 bezeichnet.

In diesem Ausführungsbeispiel können die Knoten 6 bis 18 des künstlichen neuronalen Netzes 1 in Schichten 2 bis 5 (layers) angeordnet werden, wobei die Schichten eine intrinsische Ordnung aufweisen können, die durch die Kanten 19 bis 21 zwischen den Knoten 6 bis 18 eingeführt wird. Insbesondere können Kanten 19 bis 21 nur zwischen benachbarten Schichten von Knoten 6 bis 18 vorgesehen sein. Im dargestellten Ausführungsbeispiel existiert eine Eingabeschicht 2, die lediglich die Knoten 6, 7, 8 aufweist, jeweils ohne eingehende Kante. Die Ausgangsschicht 5 umfasst nur die Knoten 17, 18, jeweils ohne ausgehende Kanten, wobei ferner versteckte Schichten 3 und 4 zwischen der Eingangsschicht 2 und der Ausgangsschicht 5 liegen. Im allgemeinen Fall kann die Zahl der versteckten Schichten 3, 4 beliebig gewählt werden. Die Zahl der Knoten 6, 7, 8 der Eingangsschicht 2 entspricht üblicherweise der Zahl der Eingabewerte in das neuronale Netzwerk 1, und die Zahl der Knoten 17, 18 in der Ausgangsschicht 5 entspricht üblicherweise der Zahl der Ausgabewerte des neuronalen Netzwerks 1.

Insbesondere kann eine (reale) Zahl den Knoten 6 bis 18 des neuronalen Netzwerks 1 zugeordnet werden. Dabei bezeichnet $x^{(n)}_i$ den Wert des i-ten Knotens 6 bis 18 der n-ten Schicht 2 bis 5. Die Werte der Knoten 6, 7, 8 der Eingabeschicht 2 sind äquivalent zu den Eingabewerten des neuronalen Netzwerks 1, während die Werte der Knoten 17, 18 der Ausgangsschicht 5 äquivalent zu den Ausgabewerten des neuronalen Netzwerks 1 sind. Darüber hinaus kann jeder Kante 19, 20, 21 ein Gewicht in Form einer realen Zahl zugeordnet sein. Insbesondere ist das Gewicht eine reale Zahl im Intervall [-1, 1] oder im Intervall [0, 1,]. Dabei bezeichnet $w^{(m,n)}_{i,j}$ das Gewicht der Kante zwischen den i-ten Knoten 6 bis 18 der m-ten Schicht 2 bis 5 und den j-ten Knoten 6 bis 18 der n-ten Schicht 2 bis 5. Ferner wird die Abkürzung $w^{(n)}_{i,j}$ für das Gewicht $w^{(n,n+1)}_{i,j}$ definiert.

Um Ausgangswerte des neuronalen Netzes 1 zu berechnen, werden die Eingangswerte durch das neuronale Netz 1 propagiert. Insbesondere können die Werte der Knoten 6 bis 18 des (n+1)-ten Schicht 2 bis 5 basierend auf den Werten der Knoten 6 bis 18 der n-ten Schicht 2 bis 5 berechnet werden durch

$$x^{(n+1)}_j = f\left(\sum_i x^{(n)}_i \cdot w^{(n)}_{i,j}\right).$$

Dabei ist f eine Transferfunktion, die auch als Aktivierungsfunktion bezeichnet werden kann. Bekannte Transferfunktionen sind Stufenfunktionen, Sigmoidfunktionen (beispielsweise die logistische Funktion, die verallgemeinerte logistische Funktion, der Tangens hyperbolicus, der Arkustangens, die Fehlerfunktion, die Smoothstep-Funktion) oder Gleichrichterfunktionen (Rectifier). Die Transferfunktion wird im Wesentlichen für Normierungszwecke verwendet.

Insbesondere werden die Werte schichtweise durch das neuronale Netz 1 propagiert, wobei Werte der Eingangsschicht 2 durch die Eingangsdaten des neuronalen Netzes 1 gegeben sind. Werte der ersten versteckten Schicht 3 können basierend auf den Werten der Eingangsschicht 2 des neuronalen Netzes 1 berechnet werden, Werte der zweiten versteckten Schicht 4 können basierend auf den Werten in der ersten versteckten Schicht 3 berechnet werden usw.

Um die Werte $w^{(n)}_{i,j}$ für die Kanten 19 bis 21 festlegen zu können, muss das neuronale Netz 1 unter Verwendung von Trainingsdaten trainiert werden. Insbesondere umfassen Trainingsdaten Trainingseingangsdaten und Trainingsausgangsdaten, die im Folgenden als $t_i$ bezeichnet werden. Für einen Trainingsschritt wird das neuronale Netzwerk 1 auf die Trainingseingangsdaten angewendet, um berechnete Ausgangsdaten zu ermitteln. Insbesondere umfassen die Trainingsausgangsdaten und die berechneten Ausgangsdaten eine Zahl von Werten, wobei sich die Zahl als die Zahl der Knoten 17, 18 der Ausgangsschicht 5 bestimmt.

Insbesondere wird ein Vergleich zwischen den berechneten Ausgangsdaten und den Trainingsausgangsdaten verwendet, um die Gewichte innerhalb des neuronalen Netzes 1 rekursiv anzupassen (Rückpropagierungsalgorithmus - "back propagation algorithm"). Insbesondere können die Gewichte entsprechend

$$w'^{(n)}_{i,j} = w^{(n)}_{i,j} - \gamma \cdot \delta^{(n)}_j \cdot x^{(n)}_i$$

geändert werden, wobei $\gamma$ eine Lernrate ist und die Zahlen $\delta^{(n)}_j$ rekursiv berechnet werden können als

$$\delta^{(n)}_j = \left(\sum_k \delta^{(n+1)}_k \cdot w^{(n+1)}_{j,k}\right) \cdot f'\left(\sum_i x^{(n)}_i \cdot w^{(n)}_{i,j}\right)$$

basierend auf $\delta^{(n+1)}_j$, wenn die (n+1)-te Schicht nicht die Ausgangsschicht 5 ist, und

$$\delta_j^{(n)} = \left(x_k^{(n+1)} - t_j^{(n+1)}\right) \cdot f' \left(\sum_i x_i^{(n)} \cdot w_{i,j}^{(n)}\right)$$

falls die (n+1)-te Schicht die Ausgangsschicht 5 ist, wobei f' die erste Ableitung der Aktivierungsfunktion ist und $y_j^{(n+1)}$ der Vergleichstrainingswert für den j-ten Knoten 17, 18 der Ausgangsschicht 5 ist.

Im Folgenden wird im Hinblick auf Figur 5 auch ein Beispiel für ein Convolutional Neural Network (CNN) gegeben. Dabei ist zu beachten, dass der Ausdruck "Schicht" ("layer") dort auf leicht andere Art und Weise als für klassische neuronale Netze eingesetzt wird. Für ein klassisches neuronales Netz verweist der Ausdruck "Schicht" nur auf den Satz von Knoten, der eine Schicht bildet, mithin eine bestimmte Generation von Knoten. Für ein Convolutional Neural Network, wird der Ausdruck "Schicht" oft als ein Objekt benutzt, das aktiv Daten verändert, in anderen Worten als ein Satz von Knoten derselben Generation und entweder den Satz eingehender oder ausgehender Kanten.

Figur 5 zeigt ein Ausführungsbeispiel eines Convolutional Neural Network 22. In dem dargestellten Ausführungsbeispiel umfasst das Convolutional Neural Network 22 eine Eingangsschicht 23, eine Faltungsschicht 24 (Convolutional Layer), eine Pooling-Schicht 25, eine vollständig verbundene Schicht 26 und eine Ausgangsschicht 27. In alternativen Ausgestaltungen kann das Convolutional Neural Network 22 mehrere Faltungsschichten 24, mehrere Pooling-Schichten 25 und mehrere vollständig verbundene Schichten 26, genau wie andere Arten von Schichten, enthalten. Die Reihenfolge der Schichten kann beliebig gewählt werden, wobei üblicherweise vollständig verbundene Schichten 26 die letzten Schichten vor der Ausgangsschicht 27 bilden.

Insbesondere können innerhalb eines Convolutional Neural Network 22 die Knoten 28 bis 32 einer der Schichten 23 bis 27 als in einer d-dimensionalen Matrix oder als d-dimensionales Bild angeordnet verstanden werden. Insbesondere kann im zweidimensionalen Fall der Wert eines Knotens 28 bis 32 mit den Indizes i, j in der n-ten Schicht 23 bis 27 als $x^{(n)}[i,j]$ bezeichnet werden. Es ist darauf hinzuweisen, dass die Anordnung der Knoten 28 bis 31 einer Schicht 23 bis 27 keinerlei Auswirkung auf die Berechnungen innerhalb des Convolutional Neural Network 22 als solches hat, da diese Auswirkungen ausschließlich durch die Struktur und die Gewichte der Kanten gegeben sind.

Eine Faltungsschicht 24 ist insbesondere dadurch ausgezeichnet, dass die Struktur und die Gewichte der eingehenden Kanten eine Faltungsoperation basierend auf einer bestimmten Zahl von Kernen bildet. Insbesondere können die Struktur und die Gewichte der eingehenden Kanten so gewählt werden, dass die Werte $x_k^{(n)}$ der Knoten 29 der Faltungsschicht 24 als eine Faltung $x_k^{(n)} = K_k * x^{(n-1)}$ basierend auf den Werten $x^{(n-1)}$ der Knoten 28 der vorangehenden Schicht 23 ermittelt werden, wobei die Faltung * im zweidimensionalen Fall definiert werden kann als

$$x_k^{(n)}[i,j] = (K_k * x^{(n-1)})[i,j] = \sum_{i'} \sum_{j'} K_k[i',j'] \cdot x^{(n-1)}[i-i', j-j'].$$

Darin ist der k-te Kern $K_k$ eine d-dimensionale Matrix, in diesem Ausführungsbeispiel eine zweidimensionale Matrix, die üblicherweise klein im Vergleich zur Zahl der Knoten 28 bis 32 ist, beispielsweise eine 3x3-Matrix oder eine 5x5-Matrix. Insbesondere impliziert dies, dass die Gewichte der eingehenden Kanten nicht unabhängig sind, sondern so gewählt sind, dass sie obige Faltungsgleichung erzeugen. Im Beispiel für einen Kern, der eine 3x3-Matrix bildet, existieren nur neun unabhängige Gewichte (wobei jeder Eintrag der Kern-Matrix einem unabhängigen Gewicht entspricht), ungeachtet der Zahl der Knoten 28 bis 32 in der entsprechenden Schicht 23 bis 27. Insbesondere ist für eine Faltungsschicht 24 die Zahl der Knoten 29 in der Faltungsschicht 24 äquivalent der Zahl der Knoten 28 in der vorangehenden Schicht 23 multipliziert mit der Zahl der Faltungskerne.

Wenn die Knoten 28 der vorangehenden Schicht 23 als eine d-dimensionale Matrix angeordnet sind, kann die Nutzung der Mehrzahl von Kernen als Hinzufügung einer weiteren Dimension, die auch als Tiefendimension bezeichnet wird, verstanden werden, so dass die Knoten 29 der Faltungsschicht 24 als eine (d+1)-dimensionale Matrix angeordnet sind. Wenn die Knoten 28 der vorangehenden Schicht 23 bereits als eine (d+1)-dimensionale Matrix mit einer Tiefendimension angeordnet sind, kann die Nutzung einer Mehrzahl von Faltungskernen als Expansion entlang der Tiefendimension verstanden werden, so dass die Knoten 29 der Faltungsschicht 24 gleichermaßen als eine (d+1)-dimensionale Matrix angeordnet sind, wobei die Größe der (d+1)-dimensionalen Matrix in der Tiefendimension um den durch die Zahl der Kerne gebildeten Faktor größer ist als in der vorangehenden Schicht 23.

Der Vorteil der Nutzung von Faltungsschichten 24 ist, dass die räumlich lokale Korrelation der Eingangsdaten ausgenutzt werden kann, indem ein lokales Verbindungsmuster zwischen Knoten benachbarter Schichten geschaffen wird, insbesondere dadurch, dass jeder Knoten nur zu einem kleinen Bereich der Knoten der vorangehenden Schicht Verbindungen aufweist.

Im dargestellten Ausführungsbeispiel umfasst die Eingangsschicht 23 sechsunddreißig Knoten 28, die als eine zweidimensionale 6x6-Matrix angeordnet sind. Die Faltungsschicht 24 umfasst zweiundsiebzig Knoten 29, die als zwei zweidimensionale 6x6-Matrizen angeordnet sind, wobei jede der beiden Matrizen das Ergebnis einer Faltung der Werte der Eingangsschicht 23 mit einem Faltungskern ist. In gleicher Weise können die Knoten 29 der Faltungsschicht 24 als in einer dreidimensionalen 6x6x2-Matrix angeordnet verstanden werden, wobei die zuletzt genannte Dimension die Tiefendimension ist.

Eine Pooling-Schicht 25 zeichnet sich dadurch aus, dass die Struktur und die Gewichte der eingehenden Kanten sowie die Aktivierungsfunktion ihrer Knoten 30 eine Pooling-Operation basierend auf einer nichtlinearen Pooling-Funktion f definieren. Beispielsweise können im zweidimensionalen Fall die Werte $x^{(n)}$ der Knoten 30 der Pooling-Schicht 25 basierend auf den Werten $x^{(n+1)}$ der Knoten 29 der vorangehenden Schicht 24 als

$$x^{(n)}[i,j] = f(x^{(n-1)}[id_1, \; jd_2], \; …, \; x^{(n-1)}[id_1+d_1-1, \; jd_2+d_2-1])$$

berechnet werden. In anderen Worten kann durch die Verwendung einer Pooling-Schicht 25 die Zahl der Knoten 29, 30 reduziert werden, indem eine Anzahl von $d_1 \times d_2$ benachbarter Knoten 29 in der vorangehenden Schicht 24 durch einen einzelnen Knoten 30 ersetzt werden, der als eine Funktion der Werte der genannten Anzahl benachbarter Knoten 29 berechnet wird. Insbesondere kann die Pooling-Funktion f eine Maximumsfunktion, eine Durchschnittsbildung oder die L2-Norm sein. Insbesondere können für eine Pooling-Schicht 25 die Gewichte der eingehenden Kanten festgelegt sein und nicht durch Training modifiziert sein.

Der Vorteil der Verwendung einer Pooling-Schicht 25 ist, dass die Zahl der Knoten 29, 30 und die Zahl der Parameter reduziert wird. Dies führt zu einer Reduktion der notwendigen Berechnungsmenge innerhalb des Convolutional Neural Network 22 und somit zu einer Steuerung der Überanpassung.

Im dargestellten Ausführungsbeispiel handelt es sich bei der Pooling-Schicht 25 um eine Max-Pooling-Schicht, in der vier benachbarte Knoten mit nur einem einzigen Knoten ersetzt werden, dessen Wert durch das Maximum der Werte der vier benachbarten Knoten gebildet wird. Das Max-Pooling wird auf jede d-dimensionale Matrix der vorherigen Schicht angewendet; in diesem Ausführungsbeispiel wird das Max-Pooling auf jede der zwei zweidimensionalen Matrizen angewendet, so dass sich die Zahl der Knoten von zweiundsiebzig auf achtzehn reduziert.

Eine vollständig verbundene Schicht 26 zeichnet sich dadurch aus, dass eine Mehrzahl, insbesondere alle, Kanten zwischen den Knoten 30 der vorherigen Schicht 25 und den Knoten 31 der vollständig verbundenen Schicht 26 vorhanden sind, wobei das Gewicht jeder der Kanten individuell angepasst werden kann. In diesem Ausführungsbeispiel werden die Knoten 30 der vorangehenden Schicht 25 und der vollständig verbundenen Schicht 26 sowohl als zweidimensionale Matrizen als auch als nichtzusammenhängende Knoten (dargestellt als eine Zeile von Knoten, wobei die Zahl der Knoten zur besseren Darstellbarkeit reduziert wurde) gezeigt. In diesem Ausführungsbeispiel ist die Zahl der Knoten 31 in der vollständig verbundenen Schicht 26 gleich der Anzahl der Knoten 30 in der vorangehenden Schicht 25. In alternativen Ausführungsformen kann die Zahl der Knoten 30, 31 unterschiedlich sein.

Darüber hinaus werden in diesem Ausführungsbeispiel die Werte der Knoten 32 der Ausgangsschicht 27 bestimmt, indem die Softmax-Funktion auf die Werte der Knoten 31 der vorangehenden Schicht 26 angewendet wird. Durch Anwendung der Softmax-Funktion ist die Summe der Werte aller Knoten 32 der Ausgangsschicht 27 eins und alle Werte aller Knoten 32 der Ausgangsschicht sind reale Zahlen zwischen 0 und 1. Wenn das Convolutional Neural Network 22 zur Klassifizierung von Eingangsdaten genutzt wird, können insbesondere die Werte der Ausgangsschicht 27 als Wahrscheinlichkeit dafür interpretiert werden, dass die Eingangsdaten in eine der unterschiedlichen Klassen fallen.

Ein Convolutional Neural Network 22 kann ebenso eine ReLU-Schicht aufweisen, wobei ReLU als Akronym für "rectified linear units" steht. Insbesondere ist die Zahl der Knoten und die Struktur der Knoten innerhalb einer ReLU-Schicht äquivalent zu der Zahl der Knoten und der Strukturen der Knoten der vorangehenden Schicht. Der Wert jedes Knotens in der ReLU-Schicht kann insbesondere durch Anwendung einer Gleichrichtungsfunktion (rectifier function) auf den Wert des entsprechenden Knoten der vorangehenden Schicht berechnet werden. Beispiele für Gleichrichterfunktionen sind $f(x)=\max(0,x)$, der Tangens hyperbolicus oder die Sigmoidfunktion.

Convolutional Neural Networks 22 können insbesondere basierend auf den Rückpropagierungsalgorithmus trainiert werden. Um eine Überanpassung (overfitting) zu vermeiden, können Verfahren der Regularisierung eingesetzt werden, beispielsweise Dropout einzelner Knoten 28 bis 32, stochastisches Pooling, Nutzen von künstlichen Daten, Gewichtszerfall basierend auf der L1- oder der L2-Norm oder Maximalnorm-Einschränkungen.

Obwohl die Erfindung im Detail durch das bevorzugte Ausführungsbeispiel näher illustriert und beschrieben wurde, so ist die Erfindung nicht durch die offenbarten Beispiele eingeschränkt und andere Variationen können vom Fachmann hieraus abgeleitet werden, ohne den Schutzumfang der Erfindung zu verlassen.

Unabhängig vom grammatikalischen Geschlecht eines bestimmten Begriffes sind Personen mit männlicher, weiblicher oder anderer Geschlechteridentität mit umfasst.

**Patentansprüche**

1. Computerimplementiertes Verfahren zur Bereitstellung eines Ausgangsdatensatzes (33) auf Basis eines ein Untersuchungsobjekt (34) betreffenden Eingangsdatensatzes (35), umfassend die Schritte:

   - Empfangen des Eingangsdatensatzes (35),
   - Erzeugen einer initialen Zwischendatensatzgruppe (36) von mehrerer Zwischendatensätzen (37, 38, 39) durch Anwenden einer dem jeweiligen Zwischendatensatz (37, 38, 39) zugeordneten jeweiligen Korrekturoperation (40) auf den Eingangsdatensatz (35),
   - Ordnen der Zwischendatensätze (37, 38, 39) gemäß einer Qualitätsrangfolge (41) bezüglich ihrer Bildqualität durch einen Sortieralgorithmus (42), wobei in einer ersten Iteration die Zwischendatensätze (37, 38, 39) der initialen Zwischendatensatzgruppe (36) geordnet werden, wobei in dem Sortieralgorithmus (42)

     • durch einen Vergleichsalgorithmus (43) ein jeweiliges relatives Qualitätsmaßes (44) für die relative Bildqualität eines jeweiligen ersten der Zwischendatensätze (38) bezüglich eines jeweiligen zweiten der Zwischendatensätze (39) ermittelt wird,
     • wonach die Reihenfolge (49) des jeweiligen ersten und zweiten Zwischendatensatzes (38, 39) in der Qualitätsrangfolge (41) durch einen Vergleich des relativen Qualitätsmaßes (44) mit einem Qualitätsgrenzwert (45) vorgegeben wird,

   - wobei bei Erfüllung einer Abbruchbedingung (46) einer der Zwischendatensätze (37, 38, 39) in Abhängigkeit der Qualitätsrangfolge (41) ausgewählt wird und wenigstens ein Korrekturparameter, der einen Korrekturalgorithmus parametrisiert, um die dem ausgewählten Zwischendatensatz (37, 38, 39) zugeordnete Korrekturoperation (40) bereitzustellen, und/oder der ausgewählte Zwischendatensatz (37, 38, 39) als Ausgangsdatensatz (33) bereitgestellt werden, und
   - wobei bei Nichterfüllung der Abbruchbedingung (46) eine modifizierte Zwischendatensatzgruppe (47) gebildet wird, die wenigstens einen Zwischendatensatz (37) umfasst, der durch Anwenden einer jeweiligen von der Qualitätsrangfolge (41) abhängigen Korrekturoperation (48) auf den Eingangsdatensatz (35) erzeugt wird, wonach in einer weiteren Iteration das Ordnen der Zwischendatensätze (37, 38, 39) und das Auswerten der Abbruchbedingung (46) für die modifizierte Zwischendatensatzgruppe (47) wiederholt wird,

   wobei einerseits in wenigstens zwei der Iterationen in dem Sortieralgorithmus (42) voneinander unterschiedliche Qualitätsgrenzwerte (45) verwendet werden und/oder wobei andererseits in zumindest einer der Iterationen der Qualitätsgrenzwert (45) in Abhängigkeit des Eingangsdatensatzes (35) und/oder von einer Erfassungsinformation (50), die wenigstens eine Eigenschaft der Erfassung des Eingangsdatensatzes (35) betrifft, vorgegeben wird.

2. Computerimplementiertes Verfahren nach Anspruch 1, **dadurch gekennzeichnet, dass** der jeweilige Qualitätsgrenzwert (45) für wenigstens eine der Iterationen in Abhängigkeit einer Statistikinformation (51) vorgegeben wird, die einen Zusammenhang einer Richtig-Positiv-Rate (52) und/oder einer Falsch-Positiv-Rate (53) der ermittelten Reihenfolge (49) des ersten und zweiten Zwischendatensatzes (38, 39) von dem Grenzwert (45) für vorgegebene Referenzdaten (54) beschreibt.

3. Computerimplementiertes Verfahren nach Anspruch 2, **dadurch gekennzeichnet, dass** als die Statistikinformation (51) eine Statistikinformation (51) verwendet wird, die auf einer ersten und zweiten Teilstatistik (56, 57) basiert, wobei die erste und zweite Teilstatistik (56, 57) jeweils eine Häufigkeitsverteilung der relativen Qualitätsmaße (44) bei Anwendung des Vergleichsalgorithmus (43) auf Paare (58, 59) eines jeweiligen durch die Referenzdaten (54) vorgegeben ersten und zweiten Zwischendatensatzes (38, 39) beschreibt, wobei im Falle der ersten Teilstatistik (56) die Zwischendatensätze (38, 39) des jeweiligen Paares (58) derart aus den Referenzdaten (54) ausgewählt sind, dass die Bildqualität des ersten Zwischendatensatzes (38) höher als die Bildqualität des zweiten Zwischendatensatzes (39) ist, und wobei im Falle der zweiten Teilstatistik (57) die Zwischendatensätze (38, 39) derart aus den Referenzdaten (54) ausgewählt sind, dass die Bildqualität des ersten Zwischendatensatzes (38) niedriger als die Bildqualität des zweiten Zwischendatensatzes (39) ist.

4. Computerimplementiertes Verfahren nach Anspruch 2 oder 3, **dadurch gekennzeichnet, dass** die Statistikinformation (51) eine ROC-Kurve (82) ist oder beschreibt, die den Zusammenhang zwischen der Richtig-Positiv-Rate (52) und der Falsch-Positiv-Rate (53) beschreibt.

5. Computerimplementiertes Verfahren nach einem der Ansprüche 2 bis 4, **dadurch gekennzeichnet, dass** der jeweilige Grenzwert (45) in den Iterationen derart gewählt ist, dass für wenigstens eine der Iterationen die Richtig-Positiv-Rate (52) und/oder die Falsch-Positiv-Rate (53) kleiner ist als in wenigstens einer vorangehenden Iteration, insbesondere als in allen vorangehenden Iterationen.

6. Computerimplementiertes Verfahren nach einem der vorangehenden Ansprüche, **dadurch gekennzeichnet, dass** der Eingangsdatensatz (35) mehrere Teildatensätze (60) umfasst, die zu zeitlich voneinander beabstandeten Aufnahmezeitpunkten erfasst sind, wobei die jeweilige Korrekturoperation (40) eine zumindest teilweise Kompensation einer jeweiligen angenommenen Relativbewegung zwischen dem Untersuchungsobjekt (34) und einem Erfassungsmittel (61), durch das die Teildatensätze (60) erfasst sind, ist oder umfasst.

7. Computerimplementiertes Verfahren nach Anspruch 6, **dadurch gekennzeichnet, dass** die Erfassungsinformation (50) einen Zeitabstand (62) zwischen wenigstens zwei der Aufnahmezeitpunkte und/oder ein Bewegungsmaß (63) für eine, insbesondere sensorische erfasste, Bewegung des Untersuchungsobjekts (34) während der Erfassung des Eingangsdatensatzes vorgibt, wobei der Grenzwert (45) in wenigstens einer der Iterationen in Abhängigkeit des Zeitabstandes (62) und/oder des Bewegungsmaßes (63) vorgegeben wird.

8. Computerimplementiertes Verfahren nach einem der Ansprüche 2 bis 5 und Anspruch 7, **dadurch gekennzeichnet, dass** bei einem Erreichen oder einem Überschreiten eines jeweiligen Erfassungsgrenzwertes (66) durch das Bewegungsmaß (63) und/oder durch den Zeitabstand (62) der jeweilige Qualitätsgrenzwert (45) in wenigstens einer der Iterationen so gewählt wird, dass die Richtig-Positiv-Rate (53) und/oder die Falsch-Positiv-Rate (53) größer sind als für den Fall, dass der jeweilige Erfassungsgrenzwert (66) nicht erreicht oder überschritten wird.

9. Computerimplementiertes Verfahren nach einem der vorangehenden Ansprüche, **dadurch gekennzeichnet, dass** die Erfassungsinformation (50) zumindest zum Teil auf während der Erfassung des Eingangsdatensatzes erfassten Sensordaten (64) und/oder auf einem zur Erfassung des Eingangsdatensatzes genutzten Messprotokoll (65) basiert.

10. Computerimplementiertes Verfahren nach einem der vorangehenden Ansprüche, **dadurch gekennzeichnet, dass** für wenigstens eine der Iterationen durch einen von dem Vergleichsalgorithmus unterschiedlichen Qualitätsermittlungsalgorithmus (67) ein weiteres, insbesondere absolutes, Qualitätsmaß (68) für wenigstens einen der Zwischendatensätze (37, 38, 39) der in dieser oder in der dieser vorangehenden Iteration genutzten modifizierten Zwischendatensatzgruppe (47) ermittelt wird, wobei der in dieser Iteration genutzte Qualitätsgrenzwert (45) von dem weiteren Qualitätsmaß (68) abhängt.

11. Computerimplementiertes Verfahren nach einem der vorangehenden Ansprüche, **dadurch gekennzeichnet, dass** als Vergleichsalgorithmus (43) eine durch Maschinenlernen trainierte Funktion verwendet wird.

12. Computerimplementiertes Verfahren nach einem der vorangehenden Ansprüche, **dadurch gekennzeichnet, dass** der jeweilige Qualitätsgrenzwert (45) für wenigstens eine der Iterationen in Abhängigkeit einer Statistikinformation (51) vorgegeben wird, wobei eine erste und eine zweite Teilstatistik (56, 57) ermittelt werden, indem jeweils eine Häufigkeitsverteilung der relativen Qualitätsmaße (44) bei Anwendung des Vergleichsalgorithmus (43) auf Paare (58, 59) eines jeweiligen durch die Referenzdaten (54) vorgegeben ersten und zweiten Zwischendatensatzes (38, 39) ermittelt wird, wobei im Falle der ersten Teilstatistik (56) die Zwischendatensätze (38, 39) derart aus den Referenzdaten (54) ausgewählt werden, dass die Bildqualität des ersten Zwischendatensatzes (38) höher als die Bildqualität des zweiten Zwischendatensatzes (39) ist, und wobei im Falle der zweiten Teilstatistik (57) die Zwischendatensätze (38, 39) derart aus den Referenzdaten (54) ausgewählt werden, dass die Bildqualität des ersten Zwischendatensatzes (38) niedriger als die Bildqualität des zweiten Bilddatensatzes (39) ist, wonach die Statistikinformation (51) in Abhängigkeit der ersten und zweiten Teilstatistik (56, 57) bereitgestellt wird.

13. Vorrichtung umfassend eine Eingangsschnittstelle (70), über die ein Eingangsdatensatz (35) empfangbar ist, eine Ausgabeschnittstelle (71), über die ein Ausgangsdatensatz (33) bereitstellbar ist und eine Verarbeitungseinrichtung (72), **dadurch gekennzeichnet, dass** die Verarbeitungseinrichtung (72) dazu eingerichtet ist, das Verfahren nach einem der vorangehenden Ansprüche auszuführen.

14. Computerprogramm umfassend Anweisungen (75), die dazu eingerichtet sind, bei einer Ausführung auf einer Verarbeitungseinrichtung (72) das Verfahren nach einem der Ansprüche 1 bis 12 auszuführen.

15. Datenträger umfassend ein Computerprogramm (74) nach Anspruch 14.

**Claims**

1. Computer-implemented method for providing an output data set (33) on the basis of an input data set (35) relating to an examination subject (34), said method comprising the steps:

   - receiving the input data set (35),
   - generating an initial intermediate data set group (36) from a plurality of intermediate data sets (37, 38, 39) by applying a respective correction operation (40) associated with the respective intermediate data set (37, 38), 39) to the input data set (35),
   - ordering the intermediate data sets (37, 38, 39) according to a quality ranking (41) in respect of their image quality by means of a sorting algorithm (42), wherein the intermediate data sets (37, 38, 39) of the initial intermediate data set group (36) are ordered in a first iteration, wherein, in the sorting algorithm (42),

     • a respective relative quality metric (44) is determined for the relative image quality of a respective first of the intermediate data sets (38) in relation to a respective second of the intermediate data sets (39) by means of a comparison algorithm (43),
     • after which the order (49) of the respective first and second intermediate data set (38, 39) in the quality ranking (41) is specified by means of a comparison of the relative quality metric (44) with a quality limit value (45),

   - wherein if an abort condition (46) is met, one of the intermediate data sets (37, 38, 39) is selected as a function of the quality ranking (41) and at least one correction parameter which parameterises a correction algorithm in order to provide the correction operation (40) associated with the selected intermediate data set (37, 38, 39) and/or the selected intermediate data set (37, 38, 39) are provided as the output data set (33), and
   - wherein if the abort condition (46) is not met, a modified intermediate data set group (47) is formed which comprises at least one intermediate data set (37) which is generated by applying a respective correction operation (48) dependent on the quality ranking (41) to the input data set (35), after which, in a further iteration, the ordering of the intermediate data sets (37, 38, 39) and the evaluation of the abort condition (46) for the modified intermediate data set group (47) are repeated,

   wherein, on the one hand, quality limit values (45) different from one another are used in the sorting algorithm (42) in at least two of the iterations and/or wherein, on the other hand, the quality limit value (45) is specified in at least one of the iterations as a function of the input data set (35) and/or of acquisition information (50) relating to at least one characteristic of the acquisition of the input data set (35).

2. Computer-implemented method according to claim 1, **characterised in that** the respective quality limit value (45) is specified for at least one of the iterations as a function of statistical information (51) which describes a relationship of a true positive rate (52) and/or of a false positive rate (53) of the determined order (49) of the first and second intermediate data set (38, 39) with respect to the limit value (45) for predefined reference data (54).

3. Computer-implemented method according to claim 2, **characterised in that** statistical information (51) based on a first and second partial statistic (56, 57) is used as the statistical information (51), wherein the first and second partial statistic (56, 57) in each case describes a frequency distribution of the relative quality metrics (44) when the comparison algorithm (43) is applied to pairs (58, 59) of a respective first and second intermediate data set (38, 39) predefined by the reference data (54), wherein in the case of the first partial statistic (56) the intermediate data sets (38, 39) of the respective pair (58) are selected from the reference data (54) in such a way that the image quality of the first intermediate data set (38) is higher than the image quality of the second intermediate data set (39), and wherein in the case of the second partial statistic (57) the intermediate data sets (38, 39) are selected from the reference data (54) in such a way that the image quality of the first intermediate data set (38) is lower than the image quality of the second intermediate data set (39).

4. Computer-implemented method according to claim 2 or 3, **characterised in that** the statistical information (51) is or describes a ROC curve (82) that describes the relationship between the true positive rate (52) and the false positive rate (53).

5. Computer-implemented method according to one of claims 2 to 4, **characterised in that** the respective limit value (45) is chosen in the iterations in such a way that for at least one of the iterations the true positive rate (52) and/or the false positive rate (53) are/is less than in at least one preceding iteration, in particular than in all the preceding iterations.

6. Computer-implemented method according to one of the preceding claims, **characterised in that** the input data set (35) comprises a plurality of partial data sets (60) acquired at acquisition times spaced apart from one another in time, wherein the respective correction operation (40) is or comprises an at least partial compensation for a respective assumed relative movement between the examination subject (34) and an acquisition means (61) by which the partial data sets (60) were acquired.

7. Computer-implemented method according to claim 6, **characterised in that** the acquisition information (50) specifies a time interval (62) between at least two of the acquisition times and/or a motion metric (63) for a movement of the examination subject (34), in particular detected by means of sensors, during the acquisition of the input data set, wherein the limit value (45) is specified in at least one of the iterations as a function of the time interval (62) and/or of the motion metric (63).

8. Computer-implemented method according to one of claims 2 to 5 and claim 7, **characterised in that** when a respective acquisition limit value (66) is reached or exceeded by the motion metric (63) and/or by the time interval (62), the respective quality limit value (45) is chosen in at least one of the iterations such that the true positive rate (53) and/or the false positive rate (53) are/is greater than for the case in which the respective acquisition limit value (66) is not reached or exceeded.

9. Computer-implemented method according to one of the preceding claims, **characterised in that** the acquisition information (50) is based at least to some extent on sensor data (64) acquired during the acquisition of the input data set and/or on a measurement protocol (65) used for the acquisition of the input data set.

10. Computer-implemented method according to one of the preceding claims, **characterised in that**, for at least one of the iterations, a further, in particular absolute, quality metric (68) is determined by means of a quality determination algorithm (67) different from the comparison algorithm for at least one of the intermediate data sets (37, 38, 39) of the modified intermediate data set group (47) in this iteration or in the iteration preceding this iteration, wherein the quality limit value (45) used in this iteration is dependent on the further quality metric (68).

11. Computer-implemented method according to one of the preceding claims, **characterised in that** a function trained by means of machine learning is used as the comparison algorithm (43).

12. Computer-implemented method according to one of the preceding claims, **characterised in that** the respective quality limit value (45) is specified for at least one of the iterations as a function of statistical information (51), wherein a first and a second partial statistic (56, 57) are determined by in each case determining a frequency distribution of the relative quality metrics (44) when the comparison algorithm (43) is applied to pairs (58, 59) of a respective first and second intermediate data set (38, 39) predefined by the reference data (54), wherein in the case of the first partial statistic (56) the intermediate data sets (38, 39) are selected from the reference data (54) in such a way that the image quality of the first intermediate data set (38) is higher than the image quality of the second intermediate data set (39), and wherein in the case of the second partial statistic (57) the intermediate data sets (38, 39) are selected from the reference data (54) in such a way that the image quality of the first intermediate data set (38) is lower than the image quality of the second image data set (39), after which the statistical information (51) is provided as a function of the first and second partial statistic (56, 57).

13. Apparatus comprising an input interface (70) via which an input data set (35) can be received, an output interface (71) via which an output data set (33) can be provided, and a processing facility (72), **characterised in that** the processing facility (72) is configured to perform the method according to one of the preceding claims.

14. Computer program comprising instructions (75) which are configured to perform the method according to one of claims 1 to 12 when they are executed on a processing facility (72).

15. Data medium comprising a computer program (74) according to claim 14.

## Revendications

1. Procédé mis en œuvre par ordinateur pour se procurer un ensemble (33) de données de sortie sur la base d'un ensemble (35) de données d'entrée concernant un objet (34) à examiner, comprenant les stades :

- réception de l'ensemble (35) de données d'entrée,
- production d'un groupe (36) initial d'ensembles de données intermédiaire de plusieurs ensembles (37, 38, 39) de données intermédiaire par application d'une opération (40) de correction respective, affectée à l'ensemble (37, 38, 39) de données intermédiaire respectif, à l'ensemble (35) de données d'entrée,
- classement des ensembles (37, 38, 39) de données intermédiaire suivant une hiérarchie (41) de qualité se rapportant à leur qualité d'image par un algorithme (42) de tri, dans lequel, dans une première itération, on classe les ensembles (37, 38, 39) de données intermédiaire du groupe (36) initial d'ensembles de données intermédiaire, dans lequel, dans l'algorithme (42) de tri,

    • par un algorithme (43) de comparaison, on détermine une mesure (44) respective de qualité relative pour la qualité d'image relative d'un premier respectif des ensembles (38) de données intermédiaire par rapport à un deuxième respectif des ensembles (39) de données intermédiaire,
    • puis on prescrit la succession (49) du premier et du deuxième ensembles (38, 39) de données intermédiaire respectifs dans la hiérarchie (41) de qualité par une comparaison de la mesure (44) de qualité respective à une valeur (45) limite de qualité,

- dans lequel, si une condition (46) d'anomalie est satisfaite, on choisit l'un des ensembles (37, 38, 39) de données intermédiaire en fonction de la hiérarchie (41) de qualité et on se donne au moins un paramètre de correction, qui paramétrise un algorithme de correction, afin de se procurer l'opération (40) de correction affectée à l'ensemble (37, 38, 39) de données intermédiaire choisi, et/ou l'ensemble (37, 38, 39) de données intermédiaire choisi comme ensemble (33) de données de sortie, et
- dans lequel, si la condition (46) d'anomalie n'est pas satisfaite, on forme un groupe (47) modifié d'ensembles de données intermédiaire, qui comprend au moins un ensemble (37) de données intermédiaire, qui est produit par application à l'ensemble (35) de données d'entrée d'une opération (48) de correction respective en fonction de la hiérarchie (41) de qualité, puis dans une autre itération, on répète le classement des ensembles (37, 38, 39) de données intermédiaire et l'évaluation de la condition (46) d'anomalie pour le groupe (47) modifié d'ensembles de données intermédiaire,

dans lequel d'une part, dans au moins deux des itérations, on utilise, dans l'algorithme (42) de tri, des valeurs (45) limites de qualité différentes l'une de l'autre et/ou dans lequel d'autre part, dans au moins l'une des itérations, on prescrit la valeur (45) limite de qualité en fonction de l'ensemble (35) de données d'entrée et/ou d'une information (50) de saisie, qui concerne au moins une propriété de la saisie de l'ensemble (35) de données d'entrée.

**2.** Procédé mis en œuvre par ordinateur suivant la revendication 1, **caractérisé en ce que** l'on prescrit la valeur (45) limite de qualité respective pour au moins l'une des itérations en fonction d'une information (51) statistique, qui décrit une relation d'un taux (52) vrai positif et/ou d'un taux (53) faux positif de la succession (49) déterminée du premier et du deuxième ensembles (38, 39) intermédiaire à la valeur (45) limite pour des données (54) de référence données à l'avance.

**3.** Procédé mis en œuvre par ordinateur suivant la revendication 2, **caractérisé en ce que** l'on utilise, comme information (51) statistique, une information (51) statistique, qui repose sur une première et une deuxième statistiques (56, 57) partielles, dans lequel la première et la deuxième statistiques (56, 57) partielles décrivent respectivement une répartition de fréquence de la mesure (44) de qualité relative, lors de l'application de l'algorithme (43) de comparaison à des paires (58, 59) d'un premier et d'un deuxième ensembles (38, 39) de données intermédiaire données à l'avance par les données (54) de référence, dans lequel, dans le cas de la première statistique (56) partielle, les ensembles (38, 39) de données intermédiaire de la paire (58) respective sont choisis à partir des données (54) de référence, de manière à ce que la qualité d'image du premier ensemble (38) de données intermédiaire soit plus grande que la qualité d'image du deuxième ensemble (39) de données intermédiaire, et dans lequel, dans le cas de la deuxième statistique (57) partielle, les ensembles (38, 39) de données intermédiaire sont choisis à partir des données (54) de référence, de manière à ce que la qualité d'image du premier ensemble (38) de données intermédiaire soit plus petite que la qualité d'image du deuxième ensemble (39) de données intermédiaire.

**4.** Procédé mis en œuvre par ordinateur suivant la revendication 2 ou 3, **caractérisé en ce que** l'information (51) statistique est ou décrit une courbe (82) ROC, qui décrit la relation entre le taux (52) vrai positif et le taux (53) faux positif.

**5.** Procédé mis en œuvre par ordinateur suivant l'une des revendications 2 à 4, **caractérisé en ce que** la valeur (45) limite respective est choisie dans les itérations, de manière à ce que, pour au moins l'une des itérations, le taux (52) vrai positif et/ou le taux (53) faux positif soient plus petits que dans au moins une itération précédente, en particulier que dans toutes les itérations précédentes.

6. Procédé mis en œuvre par ordinateur suivant l'une des revendications précédentes, **caractérisé en ce que** l'ensemble (35) de données d'entrée comprend plusieurs ensembles (60) de données partiels, qui sont saisis à des instants d'enregistrement à distance dans le temps des uns des autres, dans lequel l'opération (40) respective de correction est ou comprend une compensation au moins partielle d'un mouvement relatif respectif supposé entre l'objet (34) à examiner et un moyen (61) de saisie, par lequel les ensembles (60) de données partiels sont saisis.

7. Procédé mis en œuvre par ordinateur suivant la revendication 6, **caractérisé en ce que** l'information (50) de saisie prescrit un laps (62) de temps entre au moins deux des instants d'enregistrement et/ou une mesure (63) du déplacement pour un mouvement détecté, en particulier par capteur, de l'objet (34) à examiner pendant la saisie de l'ensemble de données d'entrée, dans lequel on prescrit la valeur (45) limite dans au moins l'une des itérations en fonction du laps (62) de temps et/ou de la mesure (63) du déplacement.

8. Procédé mis en œuvre par ordinateur suivant l'une des revendications 2 à 5 et la revendication 7, caractérisé lorsqu'une valeur (66) limite de saisie respective est atteinte ou dépassée par la mesure (63) de déplacement et/ou par le laps (62) de temps, on choisit la valeur (45) limite de qualité respective dans au moins l'une des itérations, de manière à ce que le taux (53) vrai positif et/ou le taux (53) faux positif soit plus grand que dans le cas où la valeur (66) limite de saisie n'est pas atteinte ou dépassée.

9. Procédé mis en œuvre par ordinateur suivant l'une des revendications précédentes, **caractérisé en ce que** l'information (50) de saisie repose au moins en partie sur des données (64) de capteur détectées pendant la saisie de l'ensemble de données d'entrée et/ou sur un protocole (65) de mesure utilisé pour la saisie de l'ensemble de données d'entrée.

10. Procédé mis en œuvre par ordinateur suivant l'une des revendications précédentes, **caractérisé en ce que**, pour au moins l'une des itérations, on détermine, par un algorithme (67) de détermination de qualité, différent de l'algorithme de comparaison, une autre mesure (68) de qualité, en particulier absolue, pour au moins l'un des ensembles (37, 38, 39) de données intermédiaire du groupe (47) d'ensembles de données intermédiaire modifié, utilisé dans cette itération ou dans l'itération la précédent, dans lequel la valeur (45) limite de qualité, utilisée dans cette itération, dépend de l'autre mesure (68) de qualité.

11. Procédé mis en œuvre par ordinateur suivant l'une des revendications précédentes, **caractérisé en ce que** l'on utilise, comme algorithme (43) de comparaison, une fonction entraînée par apprentissage automatique.

12. Procédé mis en œuvre par ordinateur suivant l'une des revendications précédentes, **caractérisé en ce que** l'on prescrit la valeur (45) limite de qualité respective, pour au moins l'une des itérations, en fonction d'une information (51) statistique,
dans lequel on détermine une première et une deuxième statistiques (56, 57) partielles en déterminant respectivement une répartition de fréquence de la mesure (44) de qualité relative, lors de l'application de l'algorithme (43) de comparaison à des paires (58, 59) d'un premier et deuxième ensembles (38, 39) de données intermédiaire prescrits par les données (54) de référence, dans lequel, dans le cas de la première statistique (56) partielle, on choisit les ensembles (38, 39) de données intermédiaire à partir des données (54) de référence, de manière à ce que la qualité d'image du premier ensemble (38) de données intermédiaire soit plus grande que la qualité d'image du deuxième ensemble (39) de données intermédiaire, et dans lequel, dans le cas de la deuxième statistique (57) partielle, on choisit les ensembles (38, 39) de données intermédiaire à partir des données (54) de référence, de manière à ce que la qualité d'image du premier ensemble (38) de données intermédiaire soit plus petite que la qualité d'image du deuxième ensemble (39) de données intermédiaire, puis on se procure l'information (51) statistique en fonction de la première et de la deuxième statistiques (56, 57) partielles.

13. Installation comprenant une interface (70) d'entrée, par laquelle un ensemble (35) de données d'entrée peut être reçu, une interface (71) de sortie, par laquelle un ensemble (33) de données de sortie peut être donné et un dispositif (72) de traitement, **caractérisée en ce que** le dispositif (72) de traitement est agencé pour exécuter le procédé suivant l'une des revendications précédentes.

14. Programme d'ordinateur comprenant des instructions (75), qui sont agencées pour, lors d'une exécution sur un dispositif (72) de traitement, exécuter le procédé suivant l'une des revendications 1 à 12.

**15.** Support de données comprenant un programme (74) d'ordinateur suivant la revendication 14.

FIG 1

FIG 2

FIG 3

FIG 4

FIG 5

EP 4 439 466 B1

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

• DE 102020216017 A1

**In der Beschreibung aufgeführte Nicht-Patentliteratur**

• **VERÖFFENTLICHUNG M. HERBST et al.** Misalignment Compensation for Ultra-High Resolution and Fast CBCT Acquisitions. *Proc SPIE*, 2019, vol. 10948 (412), 406-412